# EUROPÄISCHE PATENTSCHRIFT

(11) **EP 3 966 395 B1**
(45) Veröffentlichungstag und Bekanntmachung des Hinweises auf die Patenterteilung: **18.01.2023**
(21) Anmeldenummer: 21717882.1
(22) Anmeldetag: 09.04.2021
(51) Int. Cl.: E02F 3/18, B65G 65/20, E02F 3/24

(54) **SCHAUFELRAD UND VERFAHREN ZUM SCHWENKEN MINDESTENS EINER SCHAUFEL EINES SCHAUFELRADS, SOWIE BRÜCKENSCHAUFELRADGERÄT**
BUCKET WHEEL AND METHOD FOR PIVOTING AT LEAST ONE BUCKET OF A BUCKET WHEEL, AND BRIDGE BUCKET WHEEL ASSEMBLY
ROUE À AUBES ET PROCÉDÉ DE PIVOTEMENT D'AU MOINS UNE AUBE D'UNE ROUE À AUBES, ET ÉQUIPEMENT DE REPRISE AU TAS À AUBES DE TYPE PORTIQUE

(30) Priorität: 14.05.2020 EP 20174563
(43) Veröffentlichungstag der Anmeldung: 16.03.2022
(73) Patentinhaber: FAM Minerals & Mining GmbH, 39112 Magdeburg (DE)
(72) Erfinder: SICKER, Patrick, 39128 Magdeburg (DE); SAMIEC, Florian, 39108 Magdeburg (DE)
(74) Vertreter: Angerhausen, Christoph
(86) Internationale Anmeldenummer: PCT/EP2021/059343
(87) Internationale Veröffentlichungsnummer: WO 2021/228477

(56) Entgegenhaltungen:
- DE-B- 1 029 751
- GB-A- 1 548 194
- US-A- 3 412 491
- US-A- 4 009 531

## Beschreibung

### TECHNISCHES GEBIET

Die vorliegende Erfindung betrifft im Wesentlichen ein in Drehrichtung umkehrbares Schaufelrad mit einem Mechanismus zum automatischen Schwenken bzw. Umlegen von an dem Schaufelrad angeordneten Gutaufnahmeelementen in Form von Schaufeln bzw. Schaufelbechern. Ein derartiges Schaufelrad kann beispielsweise bei Fördergeräten wie Baggern, Ladegeräten, Rückladegeräten oder ähnlichen Maschinen Verwendung finden, die insbesondere der Umschlagtechnik zugeordnet werden können. Bei der Umschlagtechnik kommen üblicherweise Materialflusssysteme, also eine Kombination aus teilweise verschiedenen Fördermaschinen, zum Einsatz, deren Hauptaufgabe nicht nur die Gutaufnahme oder -gewinnung ist, sondern auch das Sicherstellen der Gutlagerung und des Gutumschlags innerhalb eines Areals. So zum Beispiel findet das Schaufelrad der vorliegenden Erfindung insbesondere beim kontinuierlichen Abbau einer Schüttguthalde, auch als Rückladung oder Auslagerung bezeichnet, Anwendung, beispielsweise als Bestandteil eines Brückenschaufelradgeräts. Das Schaufelrad, das im Fokus der vorliegenden Erfindung steht, kann dabei mittels des erfindungsgemäßen Mechanismus ein drehrichtungsabhängiges Schwenken der Schaufeln umsetzen, angetrieben durch den bereits vorhandenen Schaufelradantrieb.

### STAND DER TECHNIK

In vielen Branchen, insbesondere in der Schüttgut-verarbeitenden Industrie, ist die Lagerung und Homogenisierung unterschiedlicher Materialien als Bestandteil des Materialflussprozesses zwingend notwendig. Im grundsätzlichen Unterschied zur Restlagerung von Schüttgut aus Produktionsprozessen, wie zum Beispiel in Kalibetrieben, bildet in der Schüttgut-verarbeitenden Industrie die Lagerung des Schüttguts in Halden einen Sicherheitspuffer zwischen der üblicherweise diskontinuierlich erfolgenden Anlieferung und der kontinuierlichen Entnahme des Schüttguts, um einen nach der Entnahme folgenden Verarbeitungsprozess möglichst nicht zu unterbrechen. Kommt es bei der Anlieferung des Schüttguts zu wesentlichen Verzögerungen, fungiert entsprechend das in Halden eingelagerte Schüttgut als Sicherheitspuffer, der den kontinuierlichen Betrieb der betreffenden Anlage für einen bestimmten, vordefinierten Zeitraum gewährleisten kann.

Neben der Funktion als Sicherheitspuffer ist es in verschiedenen Branchen auch notwendig, an Schüttgutlagerplätzen zusätzlich auch eine Vergleichmäßigung bzw. Homogenisierung der Materialeigenschaften des gelagerten Schüttguts zu erreichen. Bei dieser als Mischbett bezeichneten Variante eines Lagerplatzes werden höhere Anforderungen an den Prozessablauf gestellt. So zum Beispiel sollte das Schüttgut hinsichtlich ihrer chemischen und physikalischen Eigenschaften möglichst homogen gemischt für die Weiterverarbeitung bereitgestellt werden. Diese durch Durchmischung erfolgte Homogenisierung ist von grundlegender Bedeutung bei der Bestimmung der Qualität des Schüttguts, welche üblicherweise durch stochastisch genommene Proben bestimmt wird. Der Homogenisierungsprozess kann dabei durch die Kombination eines bestimmten Einlagerungsvorgangs und einer bestimmten Art der Rückladung gewährleistet werden, wobei das Schüttgut nacheinander in Schichten eingelagert und je nach Abbauverfahren Anteile einzelner, mehrerer oder aller Schichten gleichzeitig zurückgeladen werden. Die Verarbeitung von Materialien mit stark schwankenden Eigenschaften sowie der Bezug von Materialien aus unterschiedlichen Quellen erfordert entsprechend eine gute Homogenisierung, um die nachgeschaltete Weiterverarbeitung effektiv durchführen zu können. Entsprechend gewinnt die Homogenisierung von Schüttgütern zunehmend an Bedeutung. Zur Rückladung von Schüttgut beim Haldenabbau werden bei stirnseitiger Haldenbewirtschaftung vorrangig Fördergeräte in Form von Brückengeräten mit Schaufelrädern, sogenannte Brückenschaufelradgeräte, als Schüttgutrückladegeräte eingesetzt. Der Haldenabbau erfolgt dabei durch eine möglichst permanente Fahrbewegung des Schaufelrades, das üblicherweise auf einer beweglichen Laufkatze montiert ist. Nach Erreichen des jeweiligen Haldenendes oder bei wechselseitigem Abbau zweier Halden muss das Brückenschaufelradgerät die Arbeitsrichtung ändern, um die üblicherweise in der Zwischenzeit hinter dem Brückenschaufelradgerät neu aufgeschüttete Halde abzubauen, wodurch es beim Haldenabbau generell zu einem intermittierenden Arbeitszyklus kommt. Um die Arbeitsrichtung des Brückenschaufelradgeräts zu ändern und den Haldenabbau in der anderen Arbeitsrichtung fortzusetzen wird nach Justierung der Dicke des stirnseitig von der Halde abzutragenden vertikalen Spans das Brückenschaufelradgerät zusammen mit dem Schaufelrad in die entgegengesetzte Richtung gefahren. Für den Haldenabbau in entgegengesetzter Richtung und die dadurch erfolgende Rotation des Schaufelrades in entgegengesetzter Richtung ist es generell erforderlich, die Schaufeln auch in entgegengesetzter Richtung überhaupt einsetzen zu können. Um also bei dieser vor- und zurückgehenden Haldenabbaumethode eine möglichst effektive Rückladung zu erreichen, werden Fördergeräte mit entweder zweiseitig wirkenden oder aber umschwenkbaren Schaufelrädern benötigt.

Bei Fördergeräten mit manuell schwenkbaren Schaufeln, wie sie auf dem technischen Gebiet des Haldenabbaus teilweise bereits seit Jahren bekannt sind, werden die Schaufeln für die jeweilige Dreh- und Arbeitsrichtung üblicherweise zuerst in eine fest vorgegebene Arbeitsposition mit fest vorgegebenem Anstellwinkel gestellt und in dieser Position vorübergehend fixiert, wobei das dabei notwendige Entriegeln, Umklappen und Verriegeln der Schaufeln oft durch manuellen Zugriff des Bedienpersonals erfolgt. Bei einem derartigen Zugriff durch das Bedienpersonal besteht abgesehen von den großen, zu bewältigenden Lasten der Schaufeln ein hohes Unfallrisiko, da die Klappbewegung der Schaufeln aufgrund deren hohen Eigengewichts im Wesentlichen unkontrolliert und dadurch mit großer Gefahr für das Bedienpersonal erfolgt. Abgesehen davon ist der Zeitaufwand zum manuellen Umstellen aller auf dem Schaufelradumfang angeordneten Schaufeln durch das Bedienpersonal hoch; ein manuelles Umstellen kann abhängig von dem Schaufelraddurchmesser zu einem Anlagenstillstand und Produktionsausfall von bis zu 8-10 Stunden führen. Außerdem kann es dabei zu Beschädigungen der Gesamtkonstruktion durch unsachgemäßen Zugriff und dadurch zu einem wartungsbedingten vollständigen Ausfall des Fördergerätes über mehrere Tage kommen. Schließlich verhindert die Notwendigkeit der manuellen Umstellung der Schaufeln eine Automatisierung des Gesamtprozesses der Haldenbewirtschaftung, was in den letzten Jahren mehr und mehr gefordert wird.

Um nun die Probleme der manuell umzustellenden Schaufeln zu vermeiden wurden in der Vergangenheit bereits verschiedene Konzepte für automatisch umstellende Schaufeln eines Schaufelrads vorgestellt.

Beispielsweise ist aus der GB 1 548 194 A ein Schaufelrad mit einem feststehenden inneren Hauptrahmen, einem relativ zu dem Hauptrahmen drehbaren Außenrad und einer Vielzahl von Schaufeln bekannt, die jeweils mit dem Außenrad über eine feste Schwenkachse schwenkbar verbunden sind.

Ferner ist aus der DE 10 2011015247 A1 eine automatische Vorrichtung für automatisch umschwenkbare Schaufelräder beschrieben, bei der das Schaufelrad an seinem Umfang mit umlegbaren Schaufeln bestückt ist und ein Umschwenkvorgang der Schaufeln durch eine erste feststehende Kulisse umgesetzt wird, welche sich im oberen Bereich des Schaufelrades befindet. Die jeweilige Schaufel wird dabei durch die Drehung des Schaufelrades an der ersten Kulisse vorbeigeführt, und ein Kippbolzen, der sich an der Seitenwand der Schaufel befindet, läuft in die erste Kulisse ein und die Zwangsführung des Kippbolzens bewirkt eine Drehbewegung der Schaufel um eine feste Schwenkachse. Eine zweite Kulisse unterhalb der ersten Kulisse dient ferner dazu, in Wirkverbindung mit einem Verriegelungsbolzen die jeweilige Schaufel in einer der beiden Endstellungen zu arretieren bzw. aus dieser freizugeben. Beide Kurvenkulissen sind dabei auf einem Schlitten angebracht, welcher sich für jede Schaufel relativ zum Tragrahmen des Schaufelrades lateral verschieben lässt, um ein zeitweises Eingreifen der Vorrichtung je Schaufelrad zu ermöglichen. Bei dieser bereits bekannten Lösung ist es jedoch als nachteilig anzusehen, dass die einzelnen Schaufeln durch den Kurvenkulissenmechanismus eine nach der anderen umgeklappt werden, wodurch ein Abarbeiten des Umschwenkens aller Schaufeln nacheinander insgesamt ebenfalls wieder eine lange Zeit in Anspruch nimmt, in der der Betrieb des Schaufelrads unterbrochen wird. Darüber hinaus ist neben dem durch die Zwangsführung entstehenden hohen Verschleiß der Kulissenbauteile und der Bolzen zudem die Gefahr einer Blockade eines jeden Klappvorgangs hoch, da beispielsweise bereits geringfügige Verdreckungen der Kulissen und/oder der Kippbolzen zu einem Steckenbleiben der Bolzen in der jeweiligen Kulissenführung führen können.

Es ist somit die Aufgabe der vorliegenden Erfindung, eine Lösung vorzuschlagen, mit der ein robustes Schaufelrad mit verlässlichem automatischem Schaufelschwenkmechanismus bereitgestellt werden kann.

### ZUSAMMENFASSUNG DER ERFINDUNG

Die oben genannte Aufgabe der Erfindung wird durch ein Schaufelrad gelöst, und insbesondere durch ein Schaufelrad zum kontinuierlichen Abbau von Material einer Schüttguthalde. Das erfindungsgemäße Schaufelrad, welches auch als ein aus einem großen Rad bestehender Teil eines technischen Gerätes, an dessen äußerem Rand Schaufeln angebracht sind, bezeichnet werden kann, weist unter anderem einen feststehenden Innenring auf. Der feststehende bzw. nichtrotierende Innenring, der auch als nicht-rotierendes ringförmiges inneres Bauteil des Schaufelrads zu verstehen ist, ist dabei ein verankertes Bauteil des Schaufelrads, das keine eigene Drehbewegung zulässt. Ferner weist das erfindungsgemäße Schaufelrad einen relativ zu dem Innenring drehbaren Außenring auf, der gegenüber dem Innenring rotieren kann und auch als ringförmiges äußeres Bauteil des Schaufelrads zu verstehen ist. Entsprechend kann eine Drehung des Schaufelrads als eine Drehung des Außenrings gegenüber dem feststehenden Innenring verstanden werden.

Darüber hinaus weist das erfindungsgemäße Schaufelrad mindestens eine Schaufel auf, oder auch eine Vielzahl von Schaufeln, wie zum Beispiel 8 Schaufeln. Eine Schaufel gemäß der Erfindung kann auch als Schaufelbecher bezeichnet werden und entspricht einem schaufelförmigen Schöpfgefäß, welches unter anderem in etwa einem Tieflöffel eines Schaufelbaggers entsprechend kann. Bei dem erfindungsgemäßen Schaufelrad ist jede Schaufel mit dem Außenring über eine feste bzw. unveränderliche Schwenkachse schwenkbar verbunden. Ferner weist das erfindungsgemäße Schaufelrad mindestens einen sogenannten Stellring in Gestalt eines ringförmigen Stellelements auf, der mit dem Außenring durch eine Verriegelung trennbar in Verbindung steht, der Stellring also mit dem Außenring eine trennbare Verbindung eingehen kann. Der Stellring, der generell für die Steuerung einer Schaufelstellung dient und aus einer Vielzahl an einzelnen Segmenten zusammengesetzt sein kann, kann beispielsweise ein einzelner Stellring sein, oder kann aus zwei oder mehr Teilen bestehen bzw. das Schaufelrad kann entsprechend zwei oder mehr Stellringe aufweisen, die jeweils die Funktion des nachfolgend beschriebenen mindestens einen Stellrings umsetzen. Bei dieser Ausführung ist jeder Stellring der zwei Stellringe an einem axialen Rand des Außenrings an dessen Umfang vorgesehen, so dass die Schaufel bzw. die Vielzahl von Schaufeln des Schaufelrads zwischen den beiden Stellringen angeordnet und mit diesen jeweils verbunden ist. Beispielsweise kann der mindestens eine Stellring in einem mit dem Außenring verriegelten Zustand zusammen mit dem Außenring mitbewegt werden, während der Stellring in einem von dem Außenring entriegelten Zustand von einer Bewegung des Außenrings unabhängig bewegt oder auch festgehalten werden kann. Entsprechend kann eine Drehung des Schaufelrads als eine Drehung des Außenrings evtl. zusammen mit dem damit verbundenen Stellring gegenüber dem feststehenden Innenring verstanden werden, je nach Verbindungszustand zwischen Stellring und Außenring.

Bei dem erfindungsgemäßen Schaufelrad hat jede Schaufel einen vorzugsweise austauschbaren Führungsbolzen und der Stellring hat ein Langloch für jede Schaufel, welches beispielsweise in einer Stellringöse in Form einer sogenannten Gabelöse bestehend aus einem Verschleißblech vorgesehen ist, wobei der Führungsbolzen in dem Langloch geführt ist. Alternativ dazu können jede Schaufel ein Langloch und der Stellring einen vorzugsweise austauschbaren Führungsbolzen für jede Schaufel aufweisen, was gegenüber der vorhergehenden Ausführung zu einer umgedrehten Wirkverbindung zwischen Stellring und Schaufel führt. Durch beide beschriebenen Ausführungen wird entweder auf einer oder auf beiden Seiten jeder Schaufel eine Kombination aus Langloch und Führungsbolzen umgesetzt, mit der eine Bewegung des Außenrings gegenüber dem Stellring auf jede Schaufel übertragen wird, was in Verbindung mit der vorhin beschriebenen Schwenkachse zu einer Schwenkbewegung jeder Schaufel um die Schwenkachse führt, wobei die Schwenkbewegung durch ein Auftreffen der Schaufel auf den Außenring auf jeder Seite beschränkt wird, die Schwenkbewegung also einen maximalen Schwenkbereich von einer an dem Außenring anliegenden Endstellung der jeweiligen Schaufel in die gegenüberliegende, ebenfalls an dem Außenring anliegenden Endstellung der jeweiligen Schaufel einnehmen kann. Eine Führung der wechselweisen Schwenkbewegung einer jeden Schaufel um deren Schwenkachse wird dabei durch eine auf das entsprechende Langloch beschränkte Bewegung des Führungsbolzens sichergestellt, was zu einer kontrollierten Schwenkbewegung einer jeden Schaufel zwischen der ersten Endstellung und der zweiten Endstellung führt. Dabei kann eine Schaufel des Schaufelrads in der ersten Endstellung in einer ersten Arbeitsrichtung des Schaufelrads Schüttgut aufnehmen, und kann demnach in der gegenüberliegenden zweiten Endstellung in die entgegengesetzte Arbeitsrichtung des Schaufelrads Schüttgut aufnehmen. Zur Sicherung jeder Schaufel in der jeweiligen Endstellung schiebt sich jeweils eine Flachstelle des Stellrings unter die Schaufel, im Sinne eines Eintreibens von selbsthemmenden Keilen unterhalb der Schaufelführungsarme, wodurch eine Verdrehsicherung umgesetzt ist und dadurch die Schwenkachse gesperrt wird.

Der Stellring hält in einem mit dem Außenring verriegelten Zustand jede Schaufel entweder in der an dem Außenring anliegenden ersten Endstellung oder in der der ersten Endstellung gegenüberliegenden, ebenfalls an dem Außenring anliegenden zweiten Endstellung, wohingegen in einem von dem Außenring entriegelten Zustand des Stellrings eine Drehung des Außenrings relativ zu dem Stellring eine durch den Führungsbolzen in dem Langloch geführte Schwenkbewegung jeder Schaufel um die Schwenkachse zwischen einer der beiden Endstellungen ermöglicht. Die durch die Drehung des Außenrings relativ zu dem Stellring sich ergebende, durch den Führungsbolzen in dem Langloch geführte Schwenkbewegung führt entsprechend letztendlich zu einer Positionierung jeder Schaufel in entweder der ersten Endstellung oder aber in der zweiten Endstellung, in der die Schaufel an dem Außenring der ersten Endstellung gegenüberliegend anliegt. Dadurch wird das erfindungsgemäße Schaufelrad in die Lage versetzt, allein durch Ansteuerung des Stellrings bzgl. Verriegelung oder Entriegelung des Stellrings mit dem Außenring und insbesondere durch Bewegung des Außenrings relativ zu dem Stellring in einem entriegelten Zustand jedes Schaufelrad um dessen Schwenkachse aus der ersten Endstellung automatisch in die zweite Endstellung zu schwenken, oder vice versa. Die Schwenkachse einer jeden Schaufel kann dabei ausgehend von einer Rotationsachse des Schaufelrads nach außen gehend weiter von der Rotationsachse des Schaufelrads entfernt angeordnet sein als sowohl der Führungsbolzen als auch das Langloch. In Bezug auf konkrete Dimensionen der Langloch-Führungsbolzen-Kombination kann ein Innendurchmesser des Langlochs größer als ein Außendurchmesser des Führungsbolzens sein. Mit einer derartigen Dimensionierung der Langloch-Führungsbolzen-Kombination wird eine Gleit- bzw. Spielführung zwischen Langloch und Führungsbolzen erreicht, wodurch unter anderem eine Verdrehsicherung der einzelnen Schaufeln unterstützt wird, wie es weiter unten ausführlich beschrieben ist. Auf diese Weise kann eine automatische Führung jeder Schaufel ermöglicht und eine manuelle Einbindung von Bedienpersonal des Schaufelrads vermieden werden, so dass keine Gefahr für das Bedienpersonal beim Umschwenken der Schaufeln entstehen kann. Ferner wird bei dieser konstruktiven Lösung nicht nur eine generell verschleißarme Umsetzung erreicht, sondern zudem bei einer Vielzahl von Schaufeln an dem Schaufelrad eine gleichzeitige Schwenkbewegung aller Schaufeln von einer Endstellung in die anderen umgesetzt, wodurch die Zeit für das Umrüsten des Schaufelrads von der einen Arbeitsrichtung in die andere Arbeitsrichtung gegenüber den bisher bekannten Systemen wesentlich verringert wird.

Bei dem vorhergehend beschriebenen erfindungsgemäßen Schaufelrad ist die Schwenkachse einer jeden Schaufel gegenüber dem Außenring als fest angeordnet zu verstehen und kann durch zwei sogenannte Verlagerungsbolzen umgesetzt sein, von denen sich einer auf jeder Seite der Schaufel befindet und eine drehbare Verbindung eines Schaufelseitenteils mit einer entsprechenden Außenringgabel oder -öse bzw. einem entsprechenden Außenringauge des Außenrings bereitstellt. Ferner kann jede Schaufel mindestens einen Führungsarm aufweisen, auch als Schaufelführungsarm oder Schaufelhebel bezeichnet, der durch den Führungsbolzen einer jeden Langloch-Führungsbolzen-Kombination mit dem Stellring verbunden ist. Zumeist hat dabei jede Schaufel zwei Führungsarme, die jeweils an einer lateralen Außenseite der jeweiligen Schaufel angeordnet sind und jeweils eine Schwenkbewegung einer jeden Schaufel um deren Schwenkachse durch eine Bewegung des Führungsbolzens in dem entsprechenden Langloch führt. Auf diese Weise kann eine exakte und automatische Führung der Schaufelumschwenkbewegung von einer Endstellung in die andere Endstellung jeder Schaufel erreicht werden, ohne dass Bedienpersonal eingreifen oder die Bewegung steuern muss. Zur Sicherung jeder Schaufel in der jeweiligen Endstellung schiebt sich jeweils eine Flachstelle des Stellrings unter den Schaufelhebel, wodurch eine Verdrehsicherung umgesetzt ist.

Eine Schaufel im Sinne des vorhergehend beschriebenen erfindungsgemäßen Schaufelrads kann so aufgebaut sein, dass jede Schaufel zumindest aus einem von der Rotationsachse des Schaufelrads ausgehend außen angeordneten Schaufelboden und zwei Seitenteilen besteht, welche an zueinander entgegengesetzten Seiten des Schaufelbodens angeordnet sind. Jedes Schaufelseitenteil kann dabei über die jeweilige Schwenkachse mit dem Außenring bzw. mit einer entsprechenden Außenringgabel des Außenrings verbunden sein und den entsprechenden Führungsbolzen an einem entsprechenden Führungsarm aufweisen, der mit dem Schaufelseitenteil verbunden ist. Der diesbezügliche Führungsbolzen kann dabei in einem entsprechenden Langloch in dem Stellring angeordnet und dadurch mit dem Stellring verbunden sein, so dass eine Schwenkbewegung der Schaufel durch eine Bewegung des Führungsarms über die Schwenkachse umgesetzt wird. Das erfindungsgemäße Schaufelrad kann ferner eine Vielzahl von Schaufeln aufweisen, und jede Schaufel der Vielzahl von Schaufeln kann wechselweise in der ersten und der zweiten Endstellung verriegelt werden. Dabei kann eine synchrone Schwenkbewegung der Vielzahl von Schaufeln umgesetzt werden, so dass alle Schaufeln zeitgleich die gewünschte Schwenkbewegung von einer Endstellung in die andere Endstellung durchführen können.

Jede Schaufel deckt üblicherweise einen Teil eines entsprechenden Durchgangslochs in dem Außenring ab, auch Ringraum genannt, das sich von einer Außenseite des Außenrings zu einer Innenseite des Außenrings erstreckt. Ein von der Rotationsachse des Schaufelrads ausgehend außen verlaufender Außenumfang des Innenrings, auch Ringschurre genannt, bildet dabei einen Boden des jeweiligen Außenringlochs aus, so dass von der Schaufel aufgegriffenes Schüttgut, das sich sowohl in dem Außenringdurchgangsloch als auch in dem durch die Schaufel aufgespannten Innenraum befindet, durch die Drehung des Schaufelrads entlang der Außenseite des Innenrings befördert werden kann. Diese durch die Drehung des Schaufelrads sich ergebende Schüttgut-Beförderung führt zu einem Transport des Schüttguts zu einem an der Oberseite des Innenrings vorgesehenen Innenring-Durchgangsloch, auch Aufgabeschurre genannt, durch das das aufgegriffene Schüttgut in das Innere des Innenrings, also in Richtung der Rotationsachse des Schaufelrads befördert bzw. fallen gelassen wird, von wo aus es anschließend weiter transportiert werden kann. Entsprechend findet durch diesen Aufbau eine stetige Förderung des Schüttguts durch das Schaufelrad statt.

Gemäß einer Ausführung der vorliegenden Erfindung erfolgt die Verriegelung der trennbaren Verbindung zwischen Stellring und Außenring durch eine formschlüssige und/oder eine kraftschlüssige Verbindung. Unter "Verriegelung" in dem Sinne der vorliegenden Erfindung ist entsprechend das Herstellen der trennbaren Verbindung zu verstehen. Die erfindungsgemäße "Verriegelung" soll entsprechend nicht ausschließlich als eine formschlüssige Verbindung im Sinne einer Riegel-Riegelaufnehmer-Kombination verstanden werden, sondern kann auch durch eine rein kraftschlüssige Verbindung hergestellt werden. Als Beispiel einer formschlüssigen Verbindung ist dabei ein lösbares Ineinandergreifen von mindestens zwei Verbindungspartnern zu verstehen, wohingegen als Beispiel für eine kraftschlüssige Verbindung eine ausschließlich durch Haftreibung bedingte Verbindung zu verstehen ist, bei der eine Normal-Kraft auf die miteinander zu verbindenden Flächen wirkt, so dass ein gegenseitiges Verschieben verhindert wird, solange die durch die Haftreibung bewirkte Gegen-Kraft nicht überschritten wird. Demnach kann eine formschlüssige Verbindung im Sinne einer Riegel-Riegelaufnehmer-Kombination verstanden werden, wohingegen eine kraftschlüssige Verbindung rein durch die Auflage von Stellring auf dem Außenring und darauf einwirkende Gewichtskräfte der oft paarweise einander gegenüberliegend angeordneten Schaufeln und die dadurch entstehenden Haftreibungskräfte verstanden werden kann. Durch jede dieser Arten von Verbindung kann bewirkt werden, dass sich Stellring und Außenring im miteinander verriegelten Zustand gemeinsam drehen können, während der Stellring in einem von dem Außenring entriegelten Zustand von einer Bewegung des Außenrings unabhängig bewegt oder auch festgehalten werden kann.

Beispielsweise kann die Verriegelung bzw. das Herstellen der trennbaren Verbindung zwischen Stellring und Außenring durch eine formschlüssige Verbindung in Form einer Kombination aus einem vorgespannten Sperrriegel, der unter anderem mechanisch durch eine Druckfeder oder auch durch ein anderes mechanisches Vorspannelement vorgespannt sein kann, und mindestens einer in dem Stellring entsprechend dazu vorgesehenen Vertiefung umgesetzt sein. Entsprechend kann das Herstellen der trennbaren Verbindung durch eine tatsächliche "Verriegelung" erreicht werden, indem der Sperrriegel durch seine Vorspannung in die dafür vorgesehene Vertiefung gedrückt wird, so dass der in die Vertiefung gedrückte Sperrriegel den Stellring kraft- und formschlüssig durch die Kombination aus Sperrriegel und Vertiefung an Ort und Stelle hält. Alternativ oder auch zusätzlich dazu kann der Sperrriegel durch die Vorspannkraft so auf den Stellring gedrückt werden, dass die durch den Sperrriegel auf die äußere Oberfläche des Stellrings aufgebrachte Reibkraft den Stellring an Ort und Stelle hält. Demnach kann die Verriegelung zwischen Stellring und Außenring bei einem Weiterdrehen des Außenrings überwunden werden, wobei beispielsweise der Sperrriegel durch eine Anschrägung aus der Vertiefung geleitet und die Druckfeder zusammengepresst wird, bis der Sperrriegel die Vertiefung verlässt. Dadurch wird die Verriegelung von Stellring und Außenring aufgehoben, wodurch Stellring und Außenring voneinander unabhängig bewegt werden können.

Angesichts der beiden Schaufelendstellungen wie vorhergehend beschrieben, die je nach Arbeitsrichtung zur wechselseitigen Aufnahme von Schüttgut nutzbar sind, kann es von Vorteil sein, wenn zwei Vertiefungen in dem Stellring vorgesehen sind, die jeweils einer der beiden Schaufel-Endstellungen entsprechen, und mit denen der vorgespannte Sperrriegel abwechselnd bzw. wechselseitig in Eingriff gehen kann, je nach Endstellung der Schaufel. Insbesondere im Hinblick auf eine Vielzahl von Schaufeln des Schaufelrads ist es außerdem denkbar, dass ein Sperrriegel an mehr als an einer einzelnen Schaufel vorgesehen ist, wobei nicht an jeder Schaufel zwingend ein Sperrriegel vorgesehen sein muss, da bereits wenige Riegel ausreichen können, um die Verbindung zwischen Stellring und Außenring umzusetzen. Alternativ dazu kann je nach Schaufelgröße und innerer Reibung zwischen Stellring und Außenring auch durch eine entsprechend eingestellte Selbsthemmung im Ringsystem vollständig auf Sperrriegel verzichtet werden. Alternativ dazu, und insbesondere bei geringer Selbsthemmung, kann es aber auch notwendig sein, für jede Schaufel am Schaufelrad einen eigenen Sperrriegel vorzusehen. Entsprechend kann gemäß einer Ausführung des erfindungsgemäßen Schaufelrads an jeder Schaufel einer Vielzahl von Schaufeln ein entsprechend vorgespannter Sperrriegel und zwei entsprechende Stellring-Vertiefungen vorgesehen sein, die jeweils einer der beiden Schaufel-Endstellungen entsprechen. Dadurch kann insbesondere bei geringer Selbsthemmung des Ringsystems eine sichere Verriegelung der trennbaren Verbindung zwischen Stellring und Außenring gewährleistet werden.

Gemäß einer weiteren Ausführung der vorliegenden Erfindung kann der Stellring in dem von dem Außenring entriegelten Zustand durch eine sogenannte Arretiereinrichtung arretiert bzw. fixiert werden. Die Arretiereinrichtung kann dadurch den Stellring gegen dessen Drehung sichern, also dessen Drehung gegenüber dem Außenring unterbinden, wie es zum Beispiel bei einem durch eine Drehbewegung des Außenrings ausgelösten Mitdrehen des Stellrings auftreten kann. Die Arretiereinrichtung kann dazu einen Sperrbolzen oder Sperrdorn aufweisen, der als in einer Hülse geführter und mit einem Hydraulikzylinder oder dergleichen angetriebener Dorn ausgeführt sein kann, und der dabei derart eingerichtet sein kann, dass er mit dem feststehenden Innenring in fester Verbindung steht, also selbst als verankertes Bauteil in einer festgelegten Position im Verhältnis zum dem feststehenden Innenring angeordnet ist. Der Sperrbolzen ist derart ausgebildet, dass er mit einem an dem Stellring vorgesehenen Anschlag, d.h. einem Stellringanschlag, beispielsweise im Form eines Vorsprungs an dem Stellring, in Anlage gehen kann, wodurch er den Stellring in einer bestimmten Stellung arretieren kann. Ein derartiger Anschlag als Bolzengegenstück kann an einer einzelnen Stelle an dem Stellring vorgesehen sein, oder alternativ auch an mehreren Stellen an dem Stellring, so dass für eine Arretierung des Stellrings das Schaufelrad keine zu großen Drehbewegungen vollziehen muss, falls eine Arretierung gewünscht wird, sondern sich nur soweit drehen muss, bis der Sperrbolzen dem nächstliegenden Anschlag gegenüberliegt.

Mit einer Arretiereinrichtung wie vorhergehend beschrieben kann der Stellring an Ort und Stelle gehalten werden, während sich der Außenring dreht, ohne dass der Stellring durch die Drehung des Außenrings mitbewegt wird. Darüber hinaus kann jeweils eine Kombination aus Sperrbolzen und Anschlag an jeder lateralen Seitenkante des Stellrings vorgesehen sein, so dass auf beiden lateralen Seiten an der Außenfläche des Stellrings ein entsprechendes Paar an Sperrbolzen-Anschlag-Kombination auf einer gemeinsamen Höhe angeordnet sein kann. Dadurch kann beispielsweise eine verbesserte Arretierung des Stellrings, und zwar auf beiden Seiten, erreicht werden. Um nun den Sperrbolzen zu betätigen, also um den Sperrbolzen in Anlage mit dem Anschlag zu bringen bzw. den Sperrbolzen vom Anschlag wieder zu trennen, im einfachsten Fall also den Sperrbolzen nach vorne gegen den Anschlag drücken bzw. nach hinten von dem Anschlag wegziehen, kann beispielsweise ein Stellantrieb, wie zum Beispiel ein Hydraulikantrieb mit Hydraulikzylinder, vorgesehen sein. Der Stellantrieb steht dabei mit dem Sperrbolzen in Wirkverbindung, um den Sperrbolzen entsprechend zu dem Anschlag hin und von diesem weg zu bewegen. Alternativ dazu kann auch jede andere Art von Stellantrieb benutzt werden, so zum Beispiel ein pneumatischer Stellantrieb, ein elektromechanischer Stellantrieb oder auch ein durch Muskelkraft betätigter Stellantrieb, solange die Arretiereinrichtung den Stellring gegenüber dem Außenring sicher arretiert, so dass eine Bewegung des Außenrings gegenüber dem arretierten Stellring ein Lösen der Verriegelung der trennbaren Verbindung zwischen Stellring und Außenring bewirkt.

Um nun im Hinblick auf die vorhergehend beschriebene Arretiereinrichtung eine Stellung des Schaufelrads bestimmen zu können, d.h. um bestimmen zu können, ob sich ein Anschlag in der Nähe eines Sperrbolzens befindet, oder auch um bestimmen zu können, wie weit sich der Stellring im entriegelten Zustand gegenüber dem Außenring bewegt, kann das Schaufelrad gemäß einer Weiterbildung ferner mindestens eine Überwachungseinheit aufweisen, die eine Position des Außenrings gegenüber dem Stellring erfasst. Auf Basis einer derartigen Positionsbestimmung, d.h. auf Basis des Erfassungsergebnisses der Überwachungseinheit kann anschließend bestimmt werden, ob die Arretierung des Stellrings bewirkt und/oder gelöst werden kann, also ob sich der Stellring in einer arretierbaren Stellung befindet, oder auch ob eine Bewegung des Außenrings gegenüber dem arretierten Stellring durchgeführt wurde, die einem vollständigen Umschwenken jeder Schaufel von einer Endstellung in die andere Endstellung entspricht. Dazu kann die Überwachungseinheit beispielsweise einen Näherungssensor als Signalgeber aufweisen, der die Ringbewegungen direkt erfasst, oder einen Inkrementalgeber eines Antriebs des Schaufelrads als Signalgeber umfassen, der jede Bewegung des Schaufelrads aufzeichnet, oder auch eine Kombination aus diesen. Ein Vorteil einer derartigen Überwachungseinheit liegt folglich in der genauen Kontrolle der Drehstellung des gesamten Schaufelrads, oder auch in der genauen Kontrolle der Bewegung von Stellring zu Außenring im entriegelten Zustand.

Gemäß einer weiteren Ausführung der vorliegenden Erfindung ist der Stellring des Schaufelrads an einem Umfang des Außenrings angeordnet, so zum Beispiel an einem Außenumfang des Außenrings. Alternativ dazu kann der Stellring auch in einem anderen Verhältnis zu dem Außenring angebracht sein, beispielsweise an dessen Innenseite, solange dabei die Wirkverbindung zwischen Stellring und Langloch-Führungsbolzen-Kombination zum Schwenken der Schaufel beibehalten wird. Dazu könnte beispielsweise der Hebelarm an jeder Schaufel verlängert werden und somit seitlich an dem Außenring vorbeigeführt werden, hin bis zum Stellring, welcher konzentrisch zum Außenring an jedem beliebigen Durchmesser desselben angeordnet sein kann. Der Schwenkhebel der Schaufeln wird demnach verkürzt, wenn er außerhalb des Außenumfangs liegt, wohingegen eine Verlängerung des Schwenkhebels bei einer Verlegung des Stellrings auf die Innenseite des Außenrings erreicht werden kann.

Zudem kann bei einem erfindungsgemäßen Schaufelrad das Langloch oder auch die gesamte Langloch-Führungsbolzen-Kombination, außerhalb des Umfangs des Außenrings, insbesondere außerhalb des Außenumfangs des Außenrings angeordnet sein. Mit dem Begriff Außenumfang des Außenrings ist hierbei die tangential zur Rotationsachse des Schaufelrads und damit des Außenrings verlaufende, ausgehend von der Rotationsachse des Schaufelrads äußere, großflächige Oberfläche des Außenrings gemeint, bei der jedoch an dem Außenring eventuell nach außen gerichtete Vorsprünge oder dergleichen ausgenommen sind. Die Anordnung der gesamten Langloch-Führungsbolzen-Kombination außerhalb des Außenrings bzw. außerhalb des Außenumfangs des Außenrings führt dazu, dass die vollständige Schenkbewegung jeder Schaufel außerhalb des Außenrings durchgeführt wird.

Ferner kann bei einem Schaufelrad gemäß einer weiteren Ausführung der vorliegenden Erfindung eine Verlagerungseinrichtung zwischen Stellring und Außenring vorgesehen sein, die eine Verlagerung oder Bewegung des Stellrings gegenüber dem Außenring und vice versa ermöglicht. Eine derartige Verlagerungseinrichtung kann beispielsweise in Form von Gleitblechen vorgesehen sein, die sequentiell zwischen dem Stellring und dem Außenring angeordnet sind. Derartige Gleitbleche können beispielsweise aus verschleißfestem Gleitkunststoff hergestellt sein. Alternativ dazu kann auch ein Gleitlager, beispielsweise in Form eines Gleitrings, zwischen Stellring und Außenring vorgesehen sein, der die Verlagerung von Stellring gegenüber Außenring ermöglicht. Jede andere Art von Verlagerungseinrichtung, die eine Bewegung zwischen Stellring und Außenring ermöglicht, ist ebenso denkbar, solange diese technisch und wirtschaftlich in der vorliegenden Größenordnung praktikabel ist.

In anderen Worten ist bei einem erfindungsgemäßen Schaufelrad zum kontinuierlichen Abbau von Material einer Schüttguthalde üblicherweise der Außenring des Schaufelrads, an dem jede Schaufel außen montiert ist, als das zu verlagernde Bauteil umgesetzt. Dadurch kann das Schüttgut durch die Schaufeln aufgenommen werden, wobei eine Weiterführung des Schüttgutes von den Schaufeln durch ein entsprechendes Loch im Außenring, d.h. dem Ringraum, durch den Innenring des Schaufelrads übernommen wird, und zwar mit der am Außenumfang des Innenrings entlangführenden Ringschurre. Eine Übergabe des Schüttguts erfolgt dabei durch ein Gurtband mithilfe der am oberen Teil des Rings befindlichen Aufgabeschurre. Eine oft durch eine Abdeckung geschützte Kugeldrehverbindung verlagert den Außenring des Schaufelrads gegenüber dem Innenring des Schaufelrads und ermöglicht das Rotieren um eine sogenannte Brücke, wobei der Innenring mit einer Laufkatze verbunden ist. Das erforderliche Drehmoment stellt dabei in der Regel ein Schaufelradantrieb zur Verfügung, wobei eine Drehmomentübertragung beispielsweise über einen kreisförmigen Triebstock, welcher am Außenring montiert ist, und ein antriebsseitiges Ritzel erfolgt, also einen sogenannten Triebstockantrieb. Die Schaufeln sind bei der vorliegenden Erfindung über eine Bolzenverbindung am Außenring schwenkbar gelagert und ermöglichen ein Umschwenken um die Schwenk- oder Verlagerungsachse, wobei eine Schaufelstellung über den Stellring eingestellt werden kann. Hierzu ist jede Schaufel über einen Hebel oder dergleichen und im Anschluss über die Führungsbolzen-Langloch-Kombination mit dem Stellring wirkverbunden. Während der Aufnahme von Schüttgut durch die Schaufeln bei normalem Haldenabbau dreht der Stellring also mit dem Schaufelrad mit, während die Schaufeln verriegelt sind. Zur Sicherung der Schaufeln in jeder Endstellung schiebt sich jeweils eine Flachstelle des Stellrings unterhalb des Hebels, wodurch eine Verdrehsicherung umgesetzt ist.

Eine Schwenkbewegung während des Umschwenkens der Schaufeln von einer Endstellung in die andere Endstellung in Vorbereitung des Wechsels der Arbeitsrichtung des Schaufelrads wird über eine Koppelung zwischen der Schaufelradkatze des Brückenschaufelradgeräts und dem Stellring mithilfe der Arretiereinrichtung eingeleitet. Dabei wird der Stellring vorübergehend fest mit der Laufkatze arretiert, während das Schaufelrad bzw. der Außenring des Schaufelrads selbst weiter rotiert. Die dadurch erzwungene Relativbewegung zwischen Stellring und Außenring entriegelt zunächst die Schaufeln, wobei die Flachstelle des Stellrings unterhalb des Schaufelhebels herausgezogen wird und dadurch die Schwenkachse entsperrt wird. Bei der weiteren Bewegung schwenken anschließend alle Schaufeln am Umfang des Rades durch die Verlagerung der Hebel von einer Endstellung in die andere Endstellung, wobei der Stellring über das Langloch den Führungsbolzen des Hebels führt, oder umgekehrt, und dadurch die Schwenkbewegung der Schaufeln leitet. Ist die zu erreichende Endstellung erreicht, liegen wieder alle Schaufeln am Schaufelrad bzw. am Außenring des Schaufelrads an. Anschließend wird durch die Weiterbewegung die Flachstelle des Stellrings erneut unter den jeweiligen Hebel gezogen und verriegelt diesen in seiner neuen Position. Anschließend kann die Arbeitsroutine in entgegengesetzter Richtung fortgesetzt werden.

Wie vorhergehend bereits in Auszügen beschrieben wird mit der vorliegenden Erfindung gemäß einem weiteren Gesichtspunkt ferner ein Verfahren zum Schwenken mindestens einer Schaufel eines wie vorhergehend beschriebenen Schaufelrads bereitgestellt. Das erfindungsgemäße Verfahren, das sich explizit mit dem Umschwenken einer Schaufel oder auch der Vielzahl von Schaufeln des erfindungsgemäßen Schaufelrads beschäftigt, also einem Vorgang, der von der üblichen Arbeitsroutine des Schaufelrads während des Aufnehmen und Abgeben von Schüttgut verschieden ist, umfasst in einer ersten Dreh- bzw. Arbeitsrichtung des Schaufelrads einen Schritt des Arretierens des Stellrings des Schaufelrads, vorzugsweise durch die oben beschriebene Arretiereinrichtung, wobei diese Arretierung je nach Stellung des Schaufelrads vor dem Durchführen des Schaufelschwenkens an dem in Arbeitsrichtung nächsten Schaufelradanschlag erfolgen kann. Ferner umfasst das erfindungsgemäße Verfahren ein Lösen der Verriegelung zwischen Stellring und Außenring, indem bei arretiertem Stellring der Außenring gegenüber dem arretierten Stellring und gegenüber dem feststehenden Innenring in einer ersten Drehrichtung gedreht wird. Dadurch wird bewirkt, dass sich der Stellring von einer Bewegung des Außenrings unabhängig bewegt oder auch festgehalten werden kann. Beispielsweise kann bei der Verriegelung der trennbaren Verbindung zwischen Stellring und Außenring durch eine Kombination aus einem vorgespannten Sperrriegel und einer in dem Stellring entsprechend dazu vorgesehenen Vertiefung eine Entriegelung bzw. ein Lösen der Verriegelung erreicht werden, indem die Vorspannung des beispielsweise durch eine Druckfeder in die Vertiefung gedrückten Sperrriegels überwunden wird und entsprechend die Druckfeder zusammengepresst wird, so dass der Sperrriegel die dafür vorgesehene erste Vertiefung verlässt und damit die Verriegelung von Stellring und Außenring aufgehoben wird. Aufgrund der kontinuierlichen Rotation des Schaufelrades und der Sperrung des Stellrings erfolgt entsprechend eine Relativbewegung von Stellring zu Außenring, wodurch der Sperrriegel überwunden und eine Rotationssicherung der Schaufelführungsarme gelöst wird. Das erfindungsgemäße Verfahren wie hier beschrieben kann ferner einen Schritt des Weiterdrehens des Außenrings gegenüber dem feststehenden Innenring bei arretiertem Stellring in der ersten Drehrichtung umfassen, bis die mindestens eine Schaufel bzw. die Vielzahl von Schaufeln von der jeweiligen an dem Außenring anliegenden ersten Endstellung in die der ersten Endstellung gegenüberliegenden, an dem Außenring anliegenden zweiten Endstellung geschwenkt ist. Dabei leiten die Führungsbolzen, die beispielsweise Stellringe und Führungsarme verbinden, eine Schwenkbewegung der Schaufeln ein. Die durch das Drehen des Außenrings erzwungene Relativbewegung zwischen Stellring und Außenring entriegelt demnach zunächst die Schaufeln, wobei die Flachstelle des Stellrings unterhalb des jeweiligen Schaufelhebels herausgezogen wird und dadurch die Schwenkachse entsperrt wird. Bei der weiteren Drehung schwenken anschließend alle Schaufeln am Umfang des Rades durch die Verlagerung der Hebel von einer Endstellung in die andere Endstellung, wobei der Stellring über das Langloch den Führungsbolzen des Hebels führt, oder umgekehrt, und dadurch die Schwenkbewegung der Schaufeln leitet. Ist die zu erreichende Endstellung erreicht, liegen wieder alle Schaufeln am Schaufelrad bzw. am Außenring des Schaufelrads an. Zur Realisierung gleiten die Bolzen in den Langlöchern der Langloch-Führungsbolzen-Kombinationen. Anschließend wird bei dem Weiterdrehen des Außenrings eine erneute Verriegelung zwischen Stellring und Außenring bewirkt, indem der Sperrriegel durch seine Vorspannung in eine zweite Vertiefung gedrückt wird, so dass der in die zweite Vertiefung gedrückte Sperrriegel den Stellring kraft- und formschlüssig durch die Kombination aus Sperrriegel und Vertiefung an Ort und Stelle hält und den Stellring mit dem Außenring verbindet. Zur Sicherung der Stellringe gleiten also die Sperrriegel an der Unterseite in eine weitere Vertiefung, beispielsweise in Gestalt einer 45° Nut, und die integrierte Federrückstellung der Sperrriegel verhindern das Lösen der Keile durch Vibration. Nach dem Ende des Schwenkvorgangs können alle Schaufeln zudem in ihren neuen Endstellungen fixiert werden, was durch ein Eintreiben von selbsthemmenden Keilen unterhalb der Schaufelführungsarme erfolgt. Beispielsweise wird durch die Weiterbewegung die Flachstelle des Stellrings erneut unter den jeweiligen Hebel gezogen und verriegelt diesen in seiner neuen Position. Anschließend kann die Arretierung des Stellrings wieder gelöst werden, und die Arbeitsroutine in entgegengesetzter Richtung wird fortgesetzt.

Nach den oben angeführten Verfahrensschritten sind alle Schaufeln in die entgegengesetzte Arbeitsrichtung des Schaufelrads orientiert, und das Schaufelrad kann seine Arbeitsroutine in der entgegengesetzten Arbeitsrichtung durchführen. Zu dem erfindungsgemäßen Verfahren gehört entsprechend kurz gesagt ein Entriegeln der schwenkbaren Schaufel, gefolgt von der eigentlichen Aktion des Umschwenkens der Schaufel und letztlich die Sicherung der Schaufel in ihrer neuen Position. Das Verfahren kann hier so angewandt werden, dass alle Schaufeln nacheinander einzeln für sich oder aber alle Schaufeln des Schaufelrads gleichzeitig den Umschwenkvorgang vollziehen. Vor dem Durchführen des erfindungsgemäßen Verfahrens des Schaufelumschwenkens sollte die Drehgeschwindigkeit des Schaufelrades von einer Arbeitsgeschwindigkeit auf eine Wartungs- oder Umschwenkgeschwindigkeit gedrosselt werden, was in der Regel durch einen Frequenzumrichter durch Herabsetzen der Netzfrequenz auf ~1/5 der Arbeitsnetzfrequenz erfolgt. Zur anschließenden Initialisierung des Schaufelumschwenkvorgangs werden die an der Laufkatze vorgesehenen Sperrriegel beispielsweise über Hydraulikzylinder aktiviert. Die eingenommenen Sperrriegelpositionen koppeln demnach den Stellring mit der Laufkatze. Der Signalgeber kann in fester Verbindung mit dem Innenring bzw. mit der Laufkatze angeordnet sein, so zum Beispiel in oder an einem Ausleger der Stellringkupplung, und eine Aktivierung der Sperrriegel kann beispielsweise beim Vorbeischwenken eines Schaltlineals oder dergleichen an dem Signalgeber erfolgen. Der Signalgeber an jedem Ausleger der Stellringkupplung detektiert ein jeweils weiteres Schaltlineal am Schaufelradaußenring, wobei die Position des Lineals am Außenring zu der Arretierung am Stellring um einen Rotationswinkel des Stellrings versetzt ist, welcher für eine vollständige Schwenkbewegung der Schaufeln benötigt wird. Ein weiteres Schaltlineal kann sich wiederum in der entgegengesetzten Drehrichtung befinden, ebenfalls um einen Rotationswinkel des Stellrings versetzt, welcher für eine vollständige Rückschwenkbewegung der Schaufeln benötigt wird. Alternativ dazu kann auch ein zu erfassender Rotationswinkel des Schaufelradantriebs, beispielsweise mittels eines Inkrementalgebers, genutzt werden, solange der Rotationswinkel die Relativbewegung zwischen Stellring und Außenring angeben kann. Die daraus gewonnenen Informationen geben dem System eine Rückmeldung über den abgeschlossenen Schwenkvorgang der Schaufeln und initialisieren den Stillstand des Schaufelrads. Anschließend erfolgt die Entkopplung der Stellringe durch Lösen der Arretiereinrichtung. Das Schaufelrad mit den verriegelten Schaufeln und den mit dem Außenring verbundenen Stellringen kann anschließend wieder frei rotieren. Um die darauf folgende Arbeitsroutine in die entgegengesetzte Richtung aufzunehmen, wird das Schaufelrad entgegengesetzt auf Arbeitsgeschwindigkeit beschleunigt.

Für den Umschlag und das Mischen von Schüttgütern, insbesondere für harte Materialien und für relativ hohe Rückladeleistung, sind leistungsstarke und robuste Geräte mit einer hohen Automatisierbarkeit notwendig. Insbesondere zur Auslagerung von Schüttgutes beim Haldenabbau werden bei stirnseitiger Haldenbewirtschaftung vorrangig Brückenschaufelradgeräte als Aufnahmeelemente eingesetzt, die sich insbesondere beim Einsatz an Haldenlagerplätzen für Mischbetten aus grobkörnigen Materialien oder aus sehr lehmigen/kohäsiven Materialien bewährt haben. Gemäß einem weiteren Gesichtspunkt der vorliegenden Erfindung wird demnach ferner ein Brückenschaufelradgerät bereitgestellt, das insbesondere zur Rückladung von Material einer Schüttguthalde vorgesehen ist. Als Stützstruktur für ein derartiges Brückenschaufelradgerät kommt üblicherweise eine Brücke zum Einsatz, die den gesamten Haldenquerschnitt überspannt. Durch Schienenfahrwerke, die oft seitlich des Lagerplatzes entlanggeführt werden, wird ein Bewegen der Brücke längs der Halde umgesetzt. Ein derartiges erfindungsgemäßes Brückenschaufelradgerät weist eine an einer Brücke montierte Laufkatze auf, die entlang der Brücke beweglich ist, sich also entlang der Brücke bewegen kann. Die Laufkatze führt dabei das Schaufelrad entlang der durch die Brücke ausgebildeten Stützstruktur.

Ferner weist das erfindungsgemäße Brückenschaufelradgerät ein Schaufelrad wie vorhergehend beschrieben auf, wobei der Außenring des Schaufelrads um den mit der Laufkatze fest verbundenen Innenring rotieren kann. Darüber hinaus weist das erfindungsgemäße Brückenschaufelradgerät eine Gurtfördereinrichtung auf, auch als Gurtförderer bezeichnet, der das von dem Schaufelrad abgebaute Material in Gestalt des aufgeschaufelten Schüttguts auf einem Fördergurt bzw. einem Gurtband aufnimmt und das Schüttgut relativ zu der Laufkatze fördert. Das erfindungsgemäße Brückenschaufelgerät kann ferner einen an der Laufkatze montierten aktiven oder passiven Rechen, wie zum Beispiel eine Egge, aufweisen, der/die das Material vor dem Abbau durch das Schaufelrad an den Abbauort, beispielweise an den Fuß der Schüttguthalde befördert. Die Neigung und Ausführung des Rechens ist von der Korngröße und deren Rolleigenschaften abhängig. Ein passiver oder starrer Rechen verfährt ausschließlich mit der Schaufelradkatze. Dabei lösen die durch das Material gleitenden Reißzähne des Rechens das gut rieselnde Material. Bei einem aktiven Rechen kommt zu der Querfahrt noch eine weitere überlagerte Bewegung hinzu. Hierfür sind Rechen beispielsweise an einer umlaufenden Kette montiert, an der sogenannten Kratzerkette. Diese schürft mithilfe der Rechen lehmiges Material zum Haldenboden. Der entsprechend dem Schaufelrad vorgelagerte aktive Rechen dringt beim Haldenabbau in das aufgehaldete Schüttgut ein und löst es. Durch die Schwerkraft rieselt das gelöste Schüttgut an den Haldenfuß, wo es vom Schaufelrad aufgenommen und zum Transport an einen Gurtförderer übergeben werden kann.

Anders gesagt ist die Stützstruktur oder das Tragwerk des erfindungsgemäßen Brückenschaufelradgeräts ein horizontaler Brückenträger, auf dem die Laufkatze gelagert ist, welche mit dem erfindungsgemäßen Schaufelrad verbunden ist. Dadurch wird eine Verfahrbewegung der Laufkatze in Querrichtung des Brückenträgers ermöglicht. Für den Schaufelrad- und Katzantrieb können jeweils Elektromotoren vorgesehen sein, die durch eine entsprechende Energiekette und eine Kabeltrommel versorgt werden. Der Laufkatzrahmen wird üblicherweise durch ein Fahrwerk auf dem Tragwerk abgestützt, und eine Kugeldrehverbindung lagert das Schaufelrad, wobei eine Zentralschmieranlage und die Antriebe mit dem Schaufelrad mitfahren. Das Schüttgut wird von den Schaufeln des Schaufelrads aufgenommen und mittels einer Schurre an den Fördergurt übergeben, wobei eine Hauptaufgabe der Schurre in der Gutlenkung zu finden ist, um das Schüttgut mittig auf dem Fördergurt zu platzieren. Der Fördergurt transportiert dann das Schüttgut zu einer Übergabestation am Ende der Brücke und übergibt es an ein abführendes Gurtband.

Der Haldenabbau erfolgt bei dem erfindungsgemäßen Brückenschaufelradgerät durch permanente Fahrbewegung des Schaufelrades, das auf der beweglichen Laufkatze zusammen mit der Egge montiert ist. Nach Erreichen des jeweiligen Haldenrands in Querrichtung wird durch ein Bewegen des gesamten Konstrukts aus Brücke und Brückenschaufelradgerät üblicherweise das gesamte Brückenschaufelradgerät um eine Spandicke versetzt und die Laufkatze mit Schaufelrad in die entgegengesetzte Richtung gefahren. Grundsätzlich ergeben die drei Bewegungsrichtungen, Rotation, Querfahrt und Längszustellung das Spanvolumen des Haldenabbaus durch das Schaufelrad. Bei der sich daraus ergebenden Haldenabbaumethode durch alternierende Querfahrt sollte eine gute Rieselfähigkeit des Schüttgutes gegeben sein, da das selbstständige Abrollen des Schüttgutes die Zeitspanne überbrückt, die für das Umsteuern der Fahrbewegung der Egge notwendig ist, so dass der Fördergutstrom gut vergleichmäßigt werden kann. Falls das Schüttgut nicht selbstständig abrollt, kann ein aktiver Rechen zur Anwendung kommen. Diese Arbeitsweise des erfindungsgemäßen Brückenschaufelradgeräts ermöglicht das Abtragen einer gesamten Scheibe des stirnseitigen Haldenquerschnittes bei jeder Querfahrt des Schaufelrades. Durch den Böschungswinkel der Halde ergibt sich bei der stirnseitigen Rückgewinnung ein dreieckiger Querschnitt. Folglich ist an den Haldenrändern weniger Material zu fördern als in der Haldenmitte. Der Volumenstromausgleich kann entsprechend durch die Anpassung der Laufkatzengeschwindigkeit zum Haldenrand erfolgen, d.h. es kann eine Differenzierung der Fahrgeschwindigkeit über den Querschnitt hinweg erfolgen, wobei das Geschwindigkeitsprofil anhand eines Frequenzumrichters gesteuert und zum Haldenrand erhöht wird, und zwar soweit, dass eine moderate Abbremsung der Laufkatze zum Geräteende hin sichergestellt werden kann.

Merkmale, die zuvor zu einer Ausführungsform des Schaufelrads beschrieben wurden können sinngemäß auch zur Definition der erfindungsgemäßen Verwendung und zur Definition des erfindungsgemäßen Verfahrens verwendet werden und sind hiermit ausdrücklich auch als Verwendungs- und/oder Verfahrensmerkmale offenbart. Gleiches gilt in die andere Richtung, so dass Merkmale, die nur zur Verwendung oder zum Verfahren offenbart sind, auch zur Definition des erfindungsgemäßen Schaufelrads verwendet werden können.

Wie hier und auch in den beigefügten Ansprüchen eventuell verwendet können die Singularformen "ein"/"eine"/"einer" und "der"/"die"/"das" auch deren Plural umfassen, sofern der Kontext nicht eindeutig etwas anderes vorgibt. In ähnlicher Weise sind die Wörter "umfassen", "enthalten" und "aufweisen" sowohl als "ausschließlich" als auch "nicht ausschließlich" zu verstehen, also im Sinne von "einschließlich, aber nicht beschränkt auf...". Die Begriffe "mehrere", "Vielfaches" oder "Vielzahl" beziehen sich üblicherweise auf zwei oder mehr, d.h. 2 oder >2, einschließlich weiterer ganzzahliger Vielfacher von 1, wobei sich die Begriffe "einzeln" oder "allein" auf eins (1) beziehen, also "=1". Ferner ist der Ausdruck "mindestens eins" oder "wenigstens eins" als eins oder mehrere, d.h. 1 oder >1, ebenfalls mit ganzzahligen Vielfachen, zu verstehen. Außerdem sollen sich die Wörter "hierin", "oben", "vorher" und "unten" oder "nachfolgend" und Wörter mit ähnlicher Bedeutung, wenn sie in dieser Beschreibung verwendet werden, auf diese Beschreibung insgesamt und nicht auf bestimmte Teile der Beschreibung beziehen. Darüber hinaus ist mit dem Begriffen "ungefähr", "in etwa" oder "ca." eine Menge gemeint, die annäherungsweise oder fast gleich zu dem darauffolgenden Wert ist, mit einer maximalen Abweichung von ~1% bis 5%. Diese Begriffe werden verwendet, um eine gleichwertige Menge in der Umgebung des genannten Werts zu bezeichnen.

Darüber hinaus werden bestimmte Begriffe aus Gründen der Zweckmäßigkeit verwendet und sind nicht dazu gedacht, die Erfindung einzuschränken. Beispielsweise können sich die Begriffe "rechts", "links", "rauf", "runter", "unten" und "oben" dabei auf entsprechende Richtungen oder Positionen in den verwendeten Figuren oder deren Beschreibungen beziehen. Die hierin verwendete Terminologie umfasst dabei sowohl die explizit genannten Begriffe als auch deren Ableitungen und Begriffe mit ähnlicher Bedeutung. Auch räumlich relative Begriffe wie "darunter", "darüber", "über", "unter", "proximal", "distal" und dergleichen können verwendet werden, um die Beziehung eines Elements oder einer Komponente zu einem anderen Element oder zu einer anderen Komponente zu beschreiben. Derartige räumlich relative Begriffe können zusätzlich zu der in den Abbildungen gezeigten Position und Ausrichtung verschiedene andere Positionen und Ausrichtungen der in Gebrauch oder Betrieb befindlichen Elemente oder Komponenten umfassen. Wenn beispielsweise eine Vorrichtung in den Figuren umgedreht betrachtet wird, würden Elemente, die als "unter" oder "unterhalb" anderer Elemente oder Komponenten beschrieben werden, dann "über" oder "oberhalb" dieser anderen Elemente oder Komponenten positioniert sein. Die Vorrichtungen können auch anders im Raum orientiert sein, so zum Beispiel um 90° gedreht oder auch anders orientiert sein, und die hierin verwendeten räumlich relativen Begriffe sind entsprechend zu interpretieren. Ebenso umfasst die Beschreibung von Bewegungen entlang oder um verschiedene Achsen verschiedene spezielle Komponentenpositionen und -ausrichtungen.

Die Beschreibung spezifischer Ausführungsformen in dieser Schrift soll nicht als erschöpfend angesehen werden, oder die hierin gegebene Offenbarung soll nicht auf die genaue offenbarte Form beschränkt werden. Während hierin beschriebene spezifische Ausführungsformen und Beispiele für die Offenbarung zur Veranschaulichung dienen, sind verschiedene äquivalente Modifikationen innerhalb des Schutzumfangs der Offenbarung möglich, wie es von einem Fachmann auf dem vorliegenden technischen Gebiet erkennbar ist. Spezielle technische Elemente von beschriebenen Ausführungsformen können für technische Elemente in anderen Ausführungsformen kombiniert oder durch diese ersetzt werden. In den Zeichnungen bezeichnen gleiche Bezugszeichen gleiche Elemente, um Wiederholungen zu vermeiden, und Teile, die der Fachmann ohne spezielles Wissen umsetzen kann, können aus Gründen der Übersichtlichkeit weggelassen werden. Enthält eine Figur Bezugszeichen zur Verdeutlichung, die in dem dieser Figur zugeordneten Teil der Beschreibung nicht erläutert werden, so wird auf vorhergehende oder nachfolgende Beschreibungsabschnitte verwiesen. Während Vorteile, die bestimmten Ausführungsformen der Offenbarung zugeordnet sind, im Zusammenhang mit diesen Ausführungsformen beschrieben werden, können andere Ausführungsformen ebenfalls diese Vorteile aufweisen.

Die nachfolgenden Ausführungsformen sollen verschiedene mögliche Modifikationen der vorliegenden Erfindung veranschaulichen. Als solche sind alle spezifischen technischen Details, wie sie nachfolgend ebenfalls diskutiert werden, nicht als Beschränkungen des Umfangs der vorliegenden Erfindung auszulegen. Beschreibungen von "Ausführungsform(en)", die nicht unter den Geltungsbereich der beigefügten Ansprüche fallen, stellen lediglich mögliche beispielhafte Ausführungen dar und sind daher nicht als Teil der vorliegenden Erfindung anzusehen. Für den Fachmann ist es offensichtlich, dass verschiedene Abwandlungen und Änderungen vorgenommen werden können, ohne von dem Schutzbereich der vorliegenden Anmeldung abzuweichen, wie er durch die angehängten Ansprüche festgelegt ist. Weitere Aspekte und Vorteile der vorliegenden Erfindung ergeben sich aus der folgenden Beschreibung der bevorzugten, in den Figuren dargestellten Ausführungsformen.

### FIGURENBESCHREIBUNG

Es zeigt:
- Figur 1: eine schematische Ansicht einer Laufkatze mit einem Schaufelrad gemäß einer bevorzugten Ausführungsform der vorliegenden Erfindung in einer perspektivischen Darstellung;
- Figur 2: die in Figur 1 gezeigte Laufkatze mit Schaufelrad in einer perspektivischen Explosionsdarstellung;
- Figur 3: die in Figuren 1 und 2 gezeigte Laufkatze mit Schaufelrad in einer Seitenansicht mit Schaufeln des Schaufelrads in beiden Endstellungen;
- Figur 4: eine Detailansicht einer Schaufel am Schaufelrad in einer ersten Endstellung;
- Figur 5: eine Schnittansicht einer Führungsarm-Außenring-Verbindung entlang einer Linie A-A in Figur 4;
- Figur 6: eine Schnittansicht entlang einer Linie B-B in Figur 5 mit der Schaufel in einer Endstellung im verriegelten Zustand;
- Figur 7: eine Schnittansicht entlang einer Linie B-B in Figur 5 mit der Schaufel zwischen zwei Endstellungen in einem entriegelten Zustand;
- Figuren 8a - 8d: einen Teil des in den Figuren 1 bis 3 dargestellten Schaufelrads mit einer exemplarischen Schaufel (a) in einer ersten Endstellung, (b) in einer aus der ersten Endstellung weggeschwenkten Stellung, (c) in einer aus der ersten Endstellung weiter weggeschwenkten Stellung, und (d) in einer zweiten Endstellung;
- Figur 9: eine Detailansicht einer Langloch-Führungsbolzen-Kombination einer Schaufel am Schaufelrad in einer zweiten Endstellung in einem verriegelten und in einem entriegelten Zustand der Schaufel; und
- Figur 10: eine perspektivische Detailansicht einer Schaufel des Schaufelrads gemäß der bevorzugten Ausführung der vorliegenden Erfindung.

### BEZUGSZEICHENLISTE

- **10**: Laufkatze
- **101**: Laufkatzenausleger
- **1**: Schaufelrad
- **11**: Rotationsachse / Mittelachse
- **2**: Innenring
- **21**: Innenringaußenumfang / Ringschurre
- **22**: Innenringinnenumfang
- **23**: Durchgangsloch / Aufgabeschurre
- **3**: Außenring
- **31**: Außenringgabel oder -öse bzw. Außenringauge
- **32**: Durchgangsloch / Ringraum
- **33**: Außenringaußenumfang
- **331**: Ausnehmung im Außenringumfang
- **34**: Außenringinnenumfang
- **35**: Verriegelung / Sperrriegel
- **351**: Spitze des Sperrriegels
- **36**: Druckfeder
- **4**: Schaufel
- **4A**: erste Schaufel-Endstellung
- **4B**: zweite Schaufel-Endstellung
- **41**: Schaufelboden
- **42**: Schaufelseitenteil
- **43**: Führungsarm / Schaufelhebel
- **431**: Anschrägung des Führungsarms
- **44**: Schwenkachse
- **45**: Verlagerungsbolzen
- **46**: Führungsbolzen
- **5**: Stellring
- **51**: Stellringöse / Gabelöse
- **511**: Langloch
- **52**: Vertiefung für Sperrriegel
- **53**: Stellglied
- **531**: Aussparung
- **532**: Auflagefläche
- **533**: Stellgliedgleitblech
- **54**: Stellringanschlag
- **6**: Arretiereinrichtung
- **61**: Sperrbolzen
- **62**: zweiteilige Hülse mit Verdrehsicherung
- **7**: Verlagerungseinrichtung/Gleitblech

### BEVORZUGTE AUSFÜHRUNGSFORMEN DER ERFINDUNG

In der nachfolgenden Beschreibung wird ein Schaufelrad eines Brückenschaufelradgeräts gemäß einer bevorzugten Ausführungsform der vorliegenden Erfindung beschrieben, sowie ein diesbezügliches Verfahren zum Schwenken mindestens einer Schaufel des Schaufelrads gemäß der bevorzugten Ausführungsform der vorliegenden Erfindung.

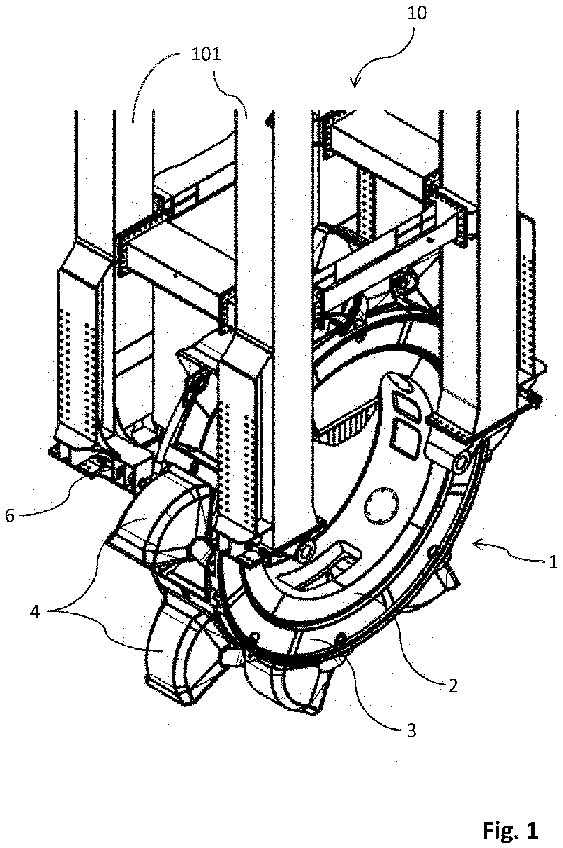

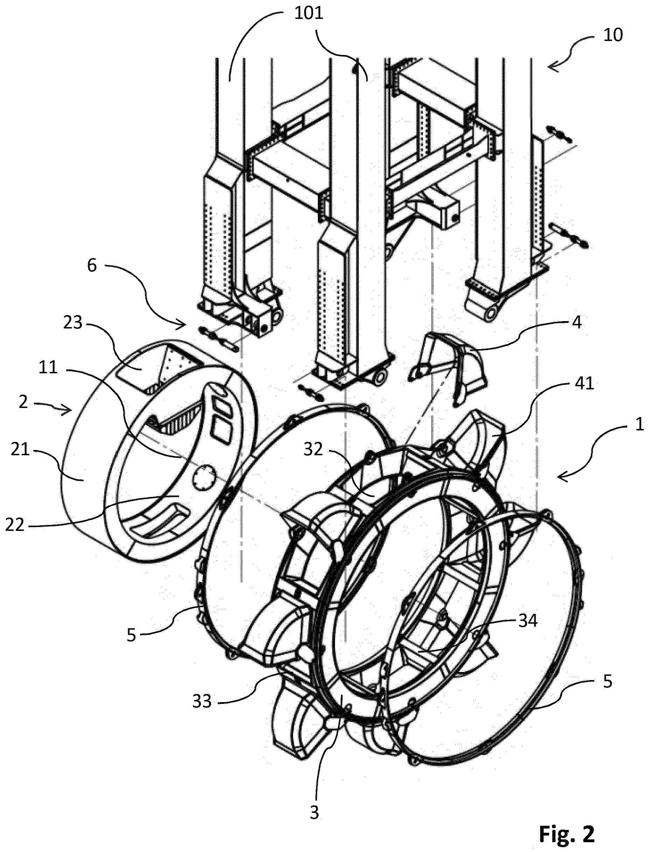

Figur 1 zeigt ein Schaufelrad 1 eines Brückenschaufelradgeräts gemäß der bevorzugten Ausführungsform der vorliegenden Erfindung, das an einer Laufkatze 10 des Brückenschaufelradgeräts montiert ist. Figur 2 zeigt die in Figur 1 dargestellte Laufkatze 10 mit dem Schaufelrad 1 in einer explodierten Ansicht. Die Laufkatze 10 weist vier miteinander verbundene Ausleger 101 auf. Das an der Laufkatze 10 montierte Schaufelrad 1 besteht im Wesentlichen aus einem mit den Auslegern 101 der Laufkatze 10 fest verbundenen Innenring 2, einem an dem Innenring 2 außen drehbar angeordneten Außenring 3, acht an dem Außenring 3 schwenkbar angebrachten Schaufeln 4 und zwei Stellringen 5, die mit den Schaufeln 4 in Wirkverbindung stehen. Jede Schaufel 4 ist dabei mit dem Außenring 3 über Schwenkachsen 44 und mit jedem Stellring 5 über eine Langloch-Führungsbolzen-Kombination schwenkbar verbunden, die an späterer Stelle genauer beschrieben werden. Jeder Stellring 5 der zwei Stellringe 5 ist wie in Figuren 1 und 2 erkennbar an einem axialen Rand bzw. an einem in Bezug auf eine Mittel- oder Rotationsachse 11 des Schaufelrads 1 seitlichen Rand des Außenrings 3 angeordnet, so dass die Vielzahl von Schaufeln 4 zwischen den beiden Stellringen 5 angeordnet und mit diesen jeweils verbunden ist. Die Zahl 8 für die Anzahl der Schaufeln 4 ist hier nur beispielhaft zu verstehen und kann auch kleiner oder größer sein, unter anderem abhängig von der Größe des Schaufelrads 1.

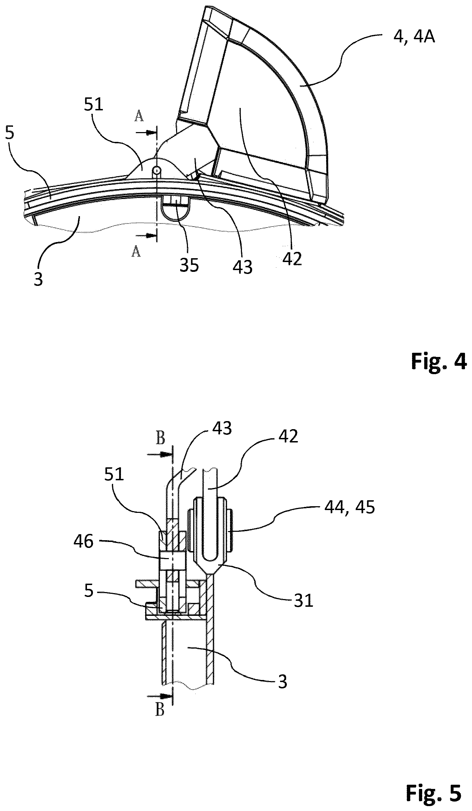

Ein Antrieb des Schaufelrads 1 zu dessen Drehung um seine Mittel- oder Rotationsachse 11 ist bei der vorliegenden Ausführungsform beispielsweise durch einen (nicht gezeigten) Zahnradantrieb umgesetzt, dessen (nicht gezeigtes) Ritzel auf einen größeren, beispielsweise an dem Außenring 3 angebrachten (nicht gezeigten) Antriebsring abwälzen kann. Alternativ dazu kann auch ein Triebstockantrieb vorgesehen sein. Der Außenring 3 kann dadurch gegenüber dem Innenring 2 gedreht werden, wobei die Relativbewegung zwischen Außenring 3 und Innenring 2 beispielsweise durch ein dazwischen angeordnetes (nicht gezeigtes) Wälzlager, beispielsweise eine Kugeldrehverbindung, eine Laufrollenabwälzung oder dergleichen, umgesetzt wird. Wie es unter anderem Figuren 5 bis 7 entnommen werden kann sind die Schaufeln 4 des Schaufelrads 1 mit dem Außenring 3 über die Schwenkachse 44 fest verbunden, wobei die Schwenkachse 44 durch einen sogenannten Verlagerungsbolzen 45 bereitgestellt wird. Jede Schaufel 4 besteht aus einem von der Rotationsachse 11 des Schaufelrads 1 ausgehend außen angeordneten Schaufelboden 41 und zwei Seitenteilen 42, welche an zueinander entgegengesetzten Seiten des Schaufelbodens 41 angeordnet sind. Jedes Schaufelseitenteil 42 geht an einer Außenseite der Schaufel 4 in einen sogenannten Führungsarm 43 über, der als Hebel zum Schwenken der jeweiligen Schaufel 4, also als Schaufelhebel, wirkt. Der Führungsarm 43, der ein von der Schaufel 4 separates Bauteil sein kann, welches an jedem Schaufelseitenteil 42 entsprechend zu befestigen ist, stellt demnach eine Abzweigung bzw. Abgabelung des Schaufelseitenteils 42 dar. Die Abzweigung des Führungsarms 43 von dem Schaufelseitenteil 42 und die Verbindungen von Führungsarm 43 und Stellring 5 bzw. von dem entsprechenden Schaufelseitenteil 42 und dem Außenring 3 kann auch Figur 5 in einer entsprechenden Schnittansicht entnommen werden. Jedes Schaufelseitenteil 42 ist dabei über den jeweiligen Verlagerungsbolzen 45 mit dem Außenring 3 verbunden, und genauer gesagt mit einer Außenringgabel 31 des Außenrings 3, der von dem Außenring 3 radial nach außen vorstehend ausgebildet ist. Der Verlagerungsbolzen 45 kann dabei mit dem jeweiligen Schaufelseitenteil 42 durch eine Schraubverbindung oder dergleichen verbunden sein, und der Verlagerungsbolzen 45 ist in einer entsprechenden Aussparung in der Außenringgabel 31 beispielsweise über ein Gleitlager1drehbar gelagert, kann aber alternativ auch anders drehbar gelagert sein. Jeder Führungsarm 43 weist einen Führungsbolzen 46 auf, der mit dem Führungsarm 43 und dadurch auch mit dem entsprechenden Schaufelseitenteil 42 verbunden ist. Der Führungsbolzen 43 kann dabei beispielsweise durch eine Presspassung oder eine Klemmverbindung mit dem Führungsarm 43 verbunden sein und dient dazu, eine Schwenkbewegung der Schaufel 4 um die Schwenkachse 44 herum zu leiten bzw. zu bewirken. Dazu ist ein freies Ende des Führungsbolzens 43 in einem durchgehenden Langloch 511 in einer Stellringöse bzw. Stellringgabelöse 51 angeordnet und in diesem geführt. Eine Bewegung des Führungsbolzens 43 in dem Langloch 511 und die entsprechende Schwenkbewegung der Schaufel 4 sind an späterer Stelle genauer beschrieben.

Der Schaufelboden 41 und die zwei Seitenteile 42 der Schaufel 4 begrenzen einen Aufnahmeinnenraum der Schaufel 4, mit dem Schüttgut aufgenommen werden kann. Wie es in Figur 2 dargestellt ist überdecken der Schaufelboden 41 zusammen mit den beiden Seitenteilen 42 ein für jede Schaufel 4 in dem Außenring 3 vorgesehenes Durchgangsloch 32 zumindest teilweise, welches auch als Ringraum 32 bezeichnet wird und das sich von einer Außenseite des Außenrings 3 zu einer Innenseite des Außenrings 3 erstreckt, also einem von der Rotationsachse 11 des Schaufelrads 1 ausgehend außen verlaufender Außenumfang 33 des Außenrings 3 mit einem von der Rotationsachse 11 des Schaufelrads 1 ausgehend innen verlaufender Innenumfang 34 des Außenrings 3 verbindet. Ein von der Rotationsachse 11 des Schaufelrads 1 ausgehend außen verlaufender Außenumfang 21 des Innenrings 2 bildet bei der vorliegend beschriebenen bevorzugten Ausführung im Wesentlichen einen Boden des jeweiligen Außenring-Ringraums 32, so dass von der zugehörigen Schaufel 4 aufgegriffenes Schüttgut, das sich sowohl in dem Außenring-Ringraum 32 als auch in dem durch die Schaufel 4 aufgespannten Aufnahmeinnenraum befindet, bei einer Drehung des Schaufelrads 4 durch den Zahnrad- oder Triebstockantrieb entlang dem Außenumfang 21 des Innenrings 2, der sogenannten Ringschurre, nach oben befördert werden kann. Diese durch die Drehung des Schaufelrads 4 sich ergebende Schüttgut-Beförderung führt zu einem Transport des Schüttguts zu einem an der in Figuren 1 und 2 dargestellten Oberseite des Innenrings 2 vorgesehenen Innenring-Durchgangsloch 23, auch als Aufgabeschurre 23 bezeichnet, durch das das aufgegriffene Schüttgut in das Innere des Innenrings 2, also von dem Innenringaußenumfang 21 zu einem Innenringinnenumfang 22 und weiter in Richtung der Rotationsachse 11 des Schaufelrads 1 gefördert wird. Dies geschieht vorliegend dadurch, dass das Schüttgut von dem durch die entsprechende Schaufel 4 und dem entsprechenden Ringraum 32 aufgespannten Aufnahmeinnenraum nach dessen Beförderung an die Oberseite des Innenrings 2 durch die Aufgabeschurre 23 in das Innere des Innenrings 2 fallen gelassen wird, wenn sich der entsprechend oben an dem Schaufelrad 1 positionierte Ringraum 32 und die dauerhaft oben an dem Innenring 2 angeordnete Aufgabeschurre 23 überdecken, also vorübergehend insgesamt ein gemeinsames Durchgangsloch 23, 32 durch das Schaufelrad 1 hindurch ausbilden. In dem Inneren des Innenrings 2 wird das fallen gelassene Schüttgut beispielsweise durch einen (nicht gezeigten) Fördergurt bzw. durch ein (nicht gezeigtes) Gurtband aufgenommen und relativ zu der Laufkatze 1 wegbefördert. Entsprechend findet durch diesen Aufbau eine stetige Förderung des Schüttguts durch das Schaufelrad 1 statt.

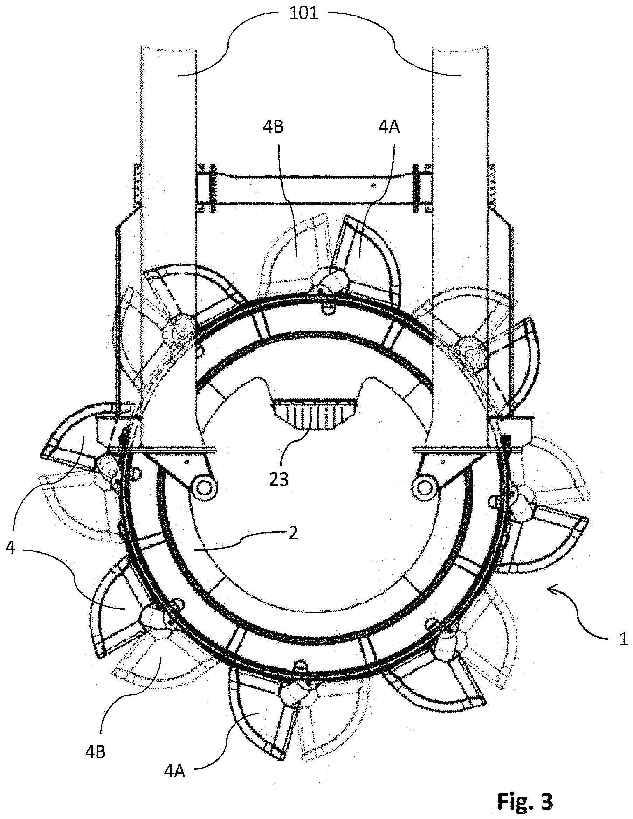

Bei der vorliegenden Darstellung in Figuren 1 und 2 ist eine durch die Stellung der Schaufeln 4 bedingte, schüttgutaufnehmende Seite des Schaufelrads 1 auf der rechten Seite der beiden Darstellungen angeordnet. Entsprechend muss das Schaufelrad 1 zur Schüttgutaufnahme gegen den Urzeigersinn bewegt werden, siehe auch Figur 3. In Figur 3 ist das Schaufelrad 1 in einer von der Seite gezeigten Darstellung zu sehen. Die Schaufeln 4 werden in dieser Darstellung in einer ersten Schaufel-Endstellung 4A mit durchgezogener Linie und in einer zweiten Schaufel-Endstellung 4B mit gestrichelter bzw. verblasster Linie dargestellt. Die erste Endstellung 4A der Schaufeln 4 stellt eine Stellung der Schaufeln 4 dar, in der ein erstes Ende der Schaufeln 4 an dem Außenumfang 33 des Außenrings 3 aufliegt und mit diesem in enger Anlage steht. Die zweite Endstellung 4B stellt eine Stellung der Schaufeln 4 dar, in denen ein zweites Ende der Schaufeln 4 an dem Außenumfang 33 des Außenrings 3 aufliegt und mit diesem in enger Anlage steht. Das zweite Ende der Schaufeln 4 ist hierbei ein dem ersten Ende der Schaufeln 4 entgegengesetztes Ende, wobei beide Enden im Wesentlichen durch ein entsprechendes Ende des Schaufelbodens 41 festgelegt ist. Die zweite Endstellung 4B der Schaufeln 4 stellt eine zu der ersten Endstellung 4A der Schaufeln 4 gegenüberliegende Endstellung dar, wobei die Schwenkbewegung der Schaufeln 4 von der ersten Endstellung 4A in die zweiten Endstellung 4B, und umgekehrt, durch ein Auftreffen der Schaufeln 4 auf den Außenring 3 auf jeder Seite beschränkt wird. Die Schwenkbewegung der Schaufeln 4 nimmt also einen maximalen Schwenkbereich von der an dem Außenring 3 anliegenden Endstellung 4A, 4B der jeweiligen Schaufel 4 in die gegenüberliegende, ebenfalls an dem Außenring 3 anliegenden Endstellung der jeweiligen Schaufel 4 ein, der bei der vorliegenden Ausführung beispielweise 118,5° überdecken kann. Entsprechend können die Schaufeln 4 des Schaufelrads 1 in der ersten Endstellung 4A in einer ersten Arbeitsrichtung des Schaufelrads 1 gegen den Uhrzeigersinn in Figur 3 Schüttgut aufnehmen bzw. aufschaufeln. Demgegenüber können die Schaufeln 4 des Schaufelrads 1 in der zweiten Endstellung 4B in einer zweiten, der ersten Arbeitsrichtung entgegengesetzten Arbeitsrichtung des Schaufelrads 1 im Uhrzeigersinn in Figur 3 Schüttgut aufnehmen bzw. aufschaufeln.

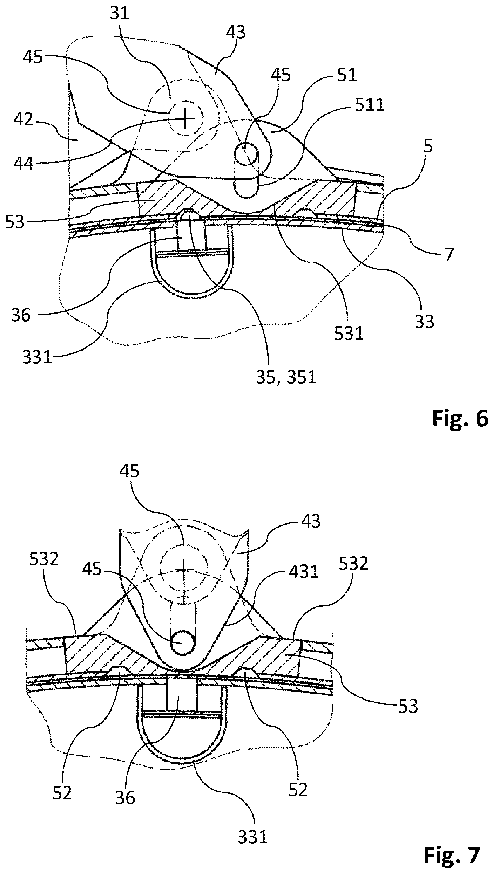

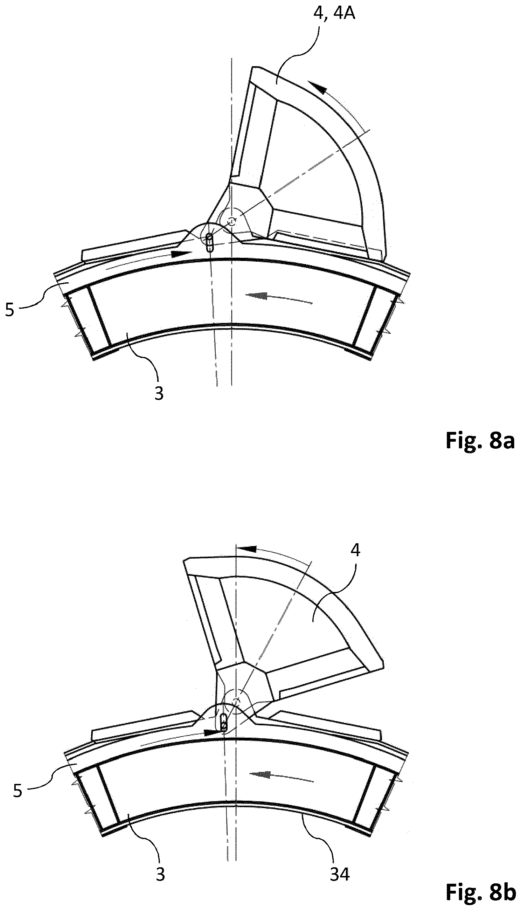

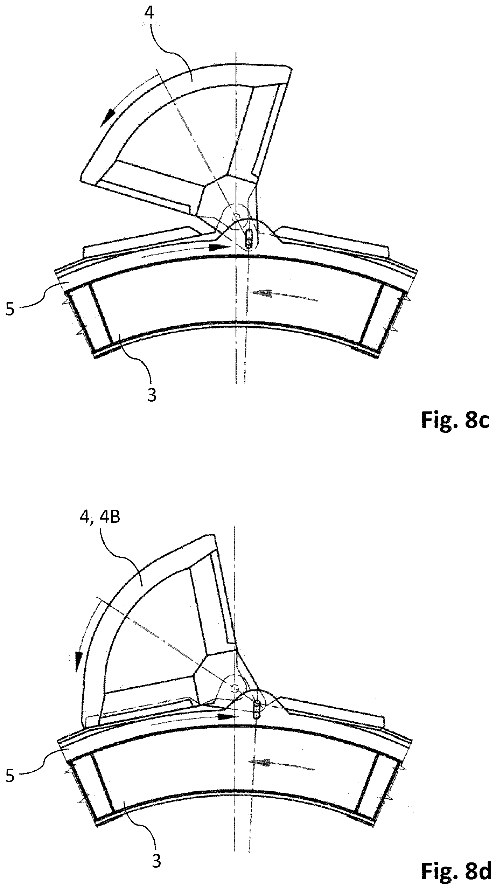

Eine Schwenkbewegung einer exemplarischen Schaufel 4 von einer Endstellung in die andere Endstellung ist in Figuren 8a bis 8d veranschaulicht, wobei Figur 8a die Positionierung der Schaufel 4 in der ersten Endstellung 4A zeigt, und in der der Stellring 5 fixiert ist. Die Pfeile in Figuren 8a bis 8d stellen Relativbewegungen des Stellrings 5 gegenüber dem Außenring 3, des Außenrings 3 gegenüber dem Stellring 5, sowie der Schaufel 4 gegenüber sowohl Außenring 3 als auch Stellring 5 dar. Durch eine Drehung des Außenrings 3 gegen den Uhrzeigersinn und bei fixiertem Stellring 5 wird dabei die Schaufel 4 automatisch um die Schwenkachse 44 im Uhrzeigersinn in Richtung der zweiten Endstellung 4B geschwenkt. Zwischen dem Stellring 5 und dem Außenring 3 ist dabei eine Verlagerungseinrichtung 7 vorgesehen, um eine Verlagerung oder Bewegung des Stellrings 5 gegenüber dem Außenring 3 und vice versa zu ermöglichen, siehe auch Figuren 6 und 7. Eine derartige Verlagerungseinrichtung 7 ist bei der vorliegend beschriebenen Ausführungsform in Form von Gleitblechen 7 vorgesehen, die sequentiell zwischen dem Stellring 5 und dem Außenring 3 angeordnet sind, und die aus verschleißfestem Gleitkunststoff bestehen. Die Schaufel 4 richtet sich bei dieser Relativbewegung entsprechend auf, wie es in Figur 8b gezeigt ist. Bei einem Weiterdrehen des Außenrings 3 wird die Schaufel 4 weiter um die Schwenkachse 44 im Uhrzeigersinn in Richtung der zweiten Endstellung 4B geschwenkt, wobei sich die Schaufel 4 in Richtung Außenringaußenumfang 33 senkt. Bei einem Weiterdrehen des Außenrings 3 gegen den fixierten Stellring 5 wird die Schaufel 4 weiter um die Schwenkachse 44 im Uhrzeigersinn gedreht, bis die Schaufel 4 die zweite Endstellung 4B eingenommen hat, wie es in Figur 8d gezeigt ist. In dieser Stellung wird die Drehung des Außenrings 3 im Uhrzeigersinn angehalten, die Schaufel 4 wird fixiert, und der Stellring 5 wird wieder gelöst, so dass das Schaufelrad 1 anschließend in die entgegengesetzte Arbeitsrichtung gedreht werden kann.

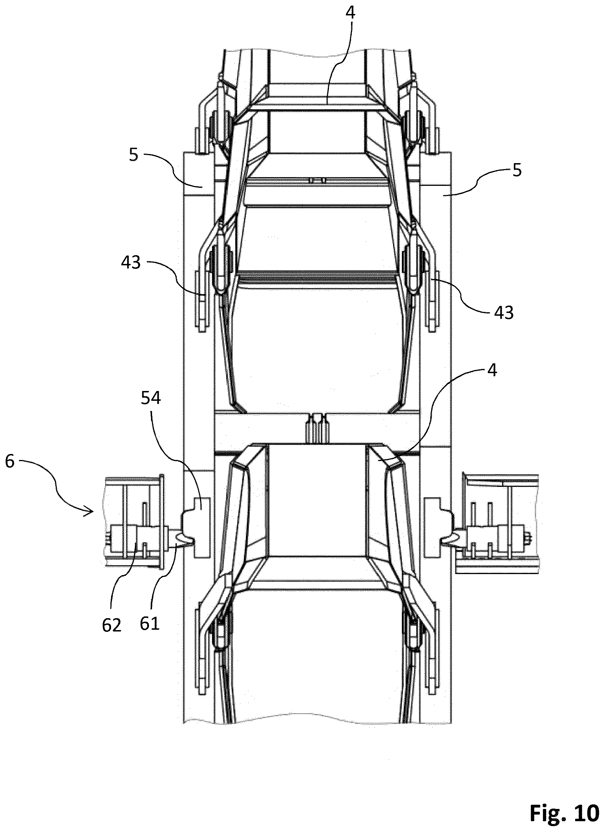

Ebenfalls in den Figuren 1 und 2 dargestellt sind zwei Paar Arretiereinrichtungen 6, von denen jeweils eine Arretiereinrichtung 6 an einem der Ausleger 101 der Laufkatze 10 angebracht ist und mit diesem und damit mit dem mit der Laufkatze 10 über deren Ausleger 101 fest verbundenen Innenring 2 in fester Verbindung steht. In der in Figur 10 gezeigten Darstellung ist ein zusammengehörendes Paar der Arretiereinrichtungen 6 in einer Draufsicht dargestellt. Jede Arretiereinrichtung 6 dient dazu, einen der beiden Stellringe 5 zu arretieren bzw. diesen zu fixieren, wodurch der jeweilige Stellring 5 gegen dessen Drehung festgehalten wird, also dessen Drehung gegenüber dem Außenring 3 in einem entriegelten Zustand von Außenring 3 und Stellring 5 zueinander unterbunden werden kann, wie es zum Beispiel bei einem durch eine Drehbewegung des Außenrings 3 ausgelösten Mitdrehen des Stellrings 5 bewirkt wird. Mit einer Arretiereinrichtung 6 kann demnach der dazugehörige Stellring 5 an Ort und Stelle gehalten werden, während sich der Außenring 3 weiterdrehen kann, ohne dass der Stellring 5 durch die Drehung des Außenrings 3 mitbewegt wird. Jede Arretiereinrichtung 6 besteht bei der hier beschriebenen bevorzugten Ausführungsform aus einem Sperrbolzen 61, der als in einer Hülse 62 geführter und mit einem Hydraulikzylinder oder dergleichen angetriebener Sperrdorn ausgeführt ist, und der durch seine Aufhängung an einem entsprechenden Ausleger 101 der Laufkatze 10 mit dem ebenfalls mit dem Ausleger 101 verbundenen feststehenden Innenring 2 in fester Verbindung steht. Jede Arretiereinrichtung 6 stellt demnach ein mit der Laufkatze 10 fest verankertes Bauteil dar, das in einer festgelegten Position im Verhältnis zum dem feststehenden Innenring 2 angeordnet ist. Der Sperrbolzen 61 ist derart ausgebildet, dass er mit einem an dem Stellring 5 vorgesehenen Anschlag 54, d.h. einem Stellringanschlag 54, der beispielsweise im Form eines Vorsprungs an dem Stellring 5 mit diesem einstückig in stoffschlüssiger Verbindung stehend vorgesehen ist, in Anlage gehen kann, wodurch er den jeweiligen Stellring 5 in einer bestimmten Stellung arretiert.

Bei der vorliegend beschriebenen Ausführungsform mit zwei Stellringen 5 sind entsprechend Stellringanschläge 54 an jedem der beiden Stellringe 5 paarweise vorgesehen, deren Stellung miteinander übereinstimmt. Ein derartiger Stellringanschlag 54 dient als Sperrbolzengegenstück und kann an einer einzelnen Stelle an dem Stellring 5 vorgesehen sein. Alternativ dazu kann ein derartiger Stellringanschlag 54 auch an mehreren Stellen an dem Stellring 5 vorgesehen sein, so dass für eine Arretierung jedes Stellrings 5 das Schaufelrad 1 keine zu großen Drehbewegungen vollziehen muss, falls eine Arretierung der Stellringe 5 vorgenommen werden soll. Stattdessen muss sich das Schaufelrad 1 nur soweit drehen, bis der Sperrbolzen 61 einer Arretiereinrichtung 6 dem nächsten Stellringanschlag 54 gegenüberliegt. Eine wie vorhergehend beschriebene Kombination aus einem Sperrbolzen 61 je Arretiereinrichtung 6 und einem entsprechenden Stellringanschlag 54 ist an jeder lateralen Seitenkante des Stellrings 5 vorgesehen sein, so dass auf jeder lateralen Seite des Stellrings 5 ein entsprechendes Paar von Sperrbolzen 61 und Stellringanschlag 54 auf einer gemeinsamen Höhe angeordnet sein kann, je nach Stellung des Stellrings 5, was zu einer gleichzeitigen Arretierung der Stellringe 5 auf beiden Seiten führt. Die Betätigung des Sperrbolzens 61, also dessen Bewegung, um den Sperrbolzen 61 in Anlage mit dem Stellringanschlag 54 zu bringen bzw. den Sperrbolzen 61 vom Stellringanschlag 54 wieder zu trennen, im einfachsten Fall also um den Sperrbolzen 61 nach vorne gegen den Stellringanschlag 54 zudrücken bzw. nach hinten von dem Stellringanschlag 54 wegzuziehen, wird durch den Hydraulikzylinder bewirkt. Der Hydraulikzylinder, der wie ein axialer Stellantrieb wirkt, steht dabei mit dem Sperrbolzen 61 in direkter Wirkverbindung, um dessen Vor- und Zurückbewegung zu bewirken.

Wie es unter anderem Figuren 4, 6 und 7 entnommen werden kann, befindet sich eine Einrichtung zum Verriegeln jedes Stellrings 5 mit dem Außenring 3 unterhalb des Außenringaußenumfangs 33, insbesondere innerhalb einer nach innen zur Rotationsachse 11 hin gerichteten Ausnehmung 331, in der ein mit einer Druckfeder 36 vorgespannter Sperrriegel 35 so angeordnet ist, dass dessen nach außen gerichtete Spitze 351 im weniger vorgespannten Zustand vollständig aus dem Außenringaußenumfang 33 nach außen hervorstehen würde. In Figur 6 ist dabei die Schaufel 4 in einer zweiten Endstellung 4B gezeigt, und in Figur 7 ist die Schaufel 4 in einer mittigen Stellung zwischen den beiden Endstellungen 4A und 4B dargestellt, die sich auch mittig zwischen den in Figuren 8b und 8c dargestellten Stellungen befindet. Die Spitze 351 des Sperrriegels 35, der fest mit dem Außenring 3 verbunden ist, geht in einem in Figuren 4 und 6 dargestellten Endstellungs-Zustand, in dem der Außenring 3 mit dem entsprechenden Stellring 5 verriegelt ist, mit einer entsprechenden Vertiefung 52 von zwei Vertiefungen 52 in sowohl kraftschlüssige als auch formschlüssige Verbindung. Dadurch wird sichergestellt, dass sich jeder Stellring 5 und der Außenring 3 im miteinander verriegelten Zustand gemeinsam in Arbeitsrichtung des Schaufelrads 1 drehen, während jeder Stellring 5 in einem von dem Außenring 3 entriegelten Zustand von einer Bewegung des Außenrings 3 unabhängig bewegt oder auch festgehalten werden kann. Die Verriegelung der trennbaren Verbindung zwischen jedem Stellring 5 und dem Außenring 3 erfolgt entsprechend durch eine Kombination aus dem mechanisch durch die Druckfeder 36 vorgespannten Sperrriegel 35 und der in dem Stellring 5 entsprechend dazu vorgesehenen Vertiefung 52. Die Spitze 351 des Sperrriegels 35 wird folglich durch seine Vorspannung in die dafür vorgesehene Vertiefung 52 gedrückt, wie es in Figur 6 dargestellt ist, so dass die in die Vertiefung 52 gedrückte Sperrriegelspitze 351 den Stellring 5 form- und kraftschlüssig nach Art einer Keilverbindung mit dem Außenring 3 verriegelt bzw. verbindet. Je Schaufel 4 und damit je Sperrriegel 35 sind zwei Vertiefungen 52 vorgesehen, wobei eine Vertiefung 52 für eine Verriegelung zwischen Außenring 3 und Stellring 5 in der ersten Endstellung 4A vorgesehen ist, und wobei die andere Vertiefung 52 für eine Verriegelung zwischen Außenring 3 und Stellring 5 in der zweiten Endstellung 4B vorgesehen ist. Die Vertiefungen 52 sind bei der hier beschriebenen Ausführungsform in einem Stellglied 53 vorgesehen, das einen entsprechenden Teil des Stellrings 5 darstellt und das mit dem Stellring 5 einstückig ausgebildet ist. Jede Sperrriegelspitze 351 und jede entsprechende Vertiefung 52 zeigt im in Figuren 6 und 7 dargestellten Querschnitt eine im Wesentlichen V-förmige Gestalt, so dass die im Wesentlichen V-förmige Spitze 351 des Sperrriegels 35 bei einer Bewegung des Außenrings 3 gegenüber dem Stellring 5 in die entsprechend ausgebildete V-förmige bzw. nutförmige Vertiefung 52 gleiten kann. Ebenso kann die dadurch erzeugte Verriegelung zwischen Stellring 5 und Außenring 3 bei einem Weiterdrehen des Außenrings 3 gegenüber dem Stellring 5 überwunden werden, indem die Sperrriegelspitze 351 durch die Anschrägung der V-Form der Vertiefung 52 gegen die Druckkraft der Druckfeder 36 aus dieser herausgeführt werden kann, so dass die Druckfeder 36 zusammengepresst wird, bis die Sperrriegelspitze 351 die Vertiefung 52 verlassen hat. Dadurch wird die Verriegelung von Stellring 5 und Außenring 3 aufgehoben, wodurch Stellring 5 und Außenring 3 voneinander unabhängig bewegt werden können. Der Sperrriegel 35 als auch die nutförmige Vertiefung 52 sind hier insbesondere in 45° Ausführung gestaltet, so dass zwischen diesen beiden zusammengehörenden Elementen generell eine Mittelstellung erzwungen wird. Es entsteht eine selbsttätig nachstellende Hemmung, wobei der Sperrriegel 35 durch die leicht versetzte V-förmige Vertiefung 52 selbsttätig stufenlos nachregulieren kann, je nachdem, wie stark die anliegende Hemmung oder der Führungsbolzen 46 bereits verschließen ist.

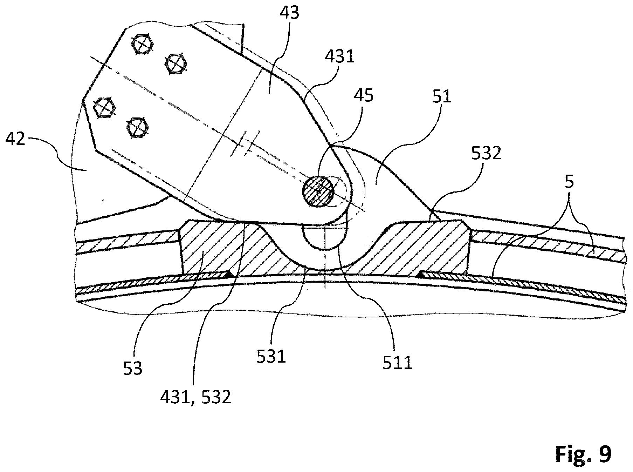

Wie es unter anderem Figuren 6 und 7 entnommen werden kann, weist das Stellglied 53, das als integraler Teil jedes Stellrings 5 für jede Schaufel 4 vorgesehen ist, neben den beiden Vertiefungen 52 ferner eine an der zu den Vertiefungen 52 entgegengesetzten Seite, d.h. an der von der Rotationsachse 11 ausgehend außen verlaufender Oberfläche des Stellglieds 53 eine Aussparung 531 auf. Die Aussparung 531 ist dazu vorgesehen, bei der Schwenkbewegung der Schaufel 4 genügend Raum für die Bewegung des Führungsbolzens 46 in dem Langloch 511 sowie für den Teil des Führungsarms 43 zu lassen, der den Führungsbolzen umgibt, so dass weder Führungsarm 43 noch Führungsbolzen 46 an einer vollumfänglichen Bewegung des Führungsbolzens 46 in dem Langloch 511 behindert werden, sieh auch Figur 7, in der die Bewegung des Führungsbolzens 46 seinen tiefsten und damit der Rotationsachse 11 des Schaufelrads 1 nähesten Punkt erreicht. Das Stellglied 53 weist darüber hinaus neben der Aussparung 531 an der von der Rotationsachse 11 ausgehend außen verlaufender Oberfläche des Stellglieds 53 auf beiden Seiten der Aussparung 531 angeschrägte Auflageflächen 532 als Verdrehsicherung der dazugehörigen Schaufel 4 auf, die beispielsweise mit einem Stellgliedgleitblech oder dergleichen versehen sein können. Vor der wie oben beschriebenen erzwungenen Relativbewegung der hier exemplarisch dargestellten Schaufel 4 ist diese in einer der Endstellungen 4A, 4B verriegelt, indem das Stellglied 53, und genauer gesagt die entsprechende Auflagefläche 532 unter eine Anschrägung 431 des Führungsarms 43, die auf beiden Seiten des Führungsarms 43 an dessen Bereich nahe dem Führungsbolzen 46 auf den Führungsbolzen 46 zulaufend ausgebildet ist, eingeschoben ist. Durch die Auflagefläche 532 mit der beschriebenen Schräge und dessen Einschieben unter die Anschrägung 431 des Führungsarms 43 wird eine Druckkraft nach oben weg von der Rotationsachse erzeugt, durch die je nach Ausgestaltung entweder (a) der Führungsbolzen 46 in dem Langloch 511 gegen den oberen Rand des Langlochs 511 gedrückt wird, oder (b) die Schaufel 4 selbst gegen den Außenumfang 33 des Außenrings 3 gedrückt wird. In Figur 9 ist die letztgenannte Zwangs- bzw. Endstellung der Schaufel 4 zum Stellring 5 gezeigt, sowie eine nach oben gedrückte Hemmungsstellung des Führungsarms 46 und des Führungsbolzens 46 durch eine gestrichelte Linie dargestellt. Die Kontaktfläche zwischen Auflagefläche und Anschrägung 431 bildet zur Bewegungsrichtung des Stellrings 5 eine Wirkverbindung im Sinne eines selbsthemmenden Keils aus, , wobei die Selbsthemmung durch den durch Reibung generierten Widerstand gegen das Verschieben der beiden gegenläufig zueinander bewegten Elemente Stellglied 53 und Führungsarm 43 erzeugt wird.

Die anschließend durch das Drehen des Außenrings 3 erzwungene Relativbewegung zwischen den Stellringen 5 und dem Außenring 3, wie sie beispielsweise Figuren 8a bis 8d entnommen werden kann, entriegelt demnach zunächst in einem ersten Schritt wie in Figur 8a dargestellt die vorhergehend beschriebene Hemmung der Schaufeln 4 durch die Stellglieder 53. Dabei wird das Stellglied 53 unterhalb des jeweiligen Führungsarms 43 herausgezogen wird und dadurch die Schwenkachse 44 enthemmt wird. Bei der weiteren Drehung des Außenrings 3 bei fixierten Stellringen 5 schwenken anschließend alle Schaufeln 4 gleichzeitig am Umfang des Schaufelrads 1 durch die Verlagerung der Führungsarme 43 von einer Endstellung in die andere Endstellung, wobei der Stellring 5 über das Langloch 511 den Führungsbolzen 46 so führt, dass dadurch die Schwenkbewegung der Schaufeln 4 geleitet wird, siehe Figuren 8a bis 8d. Ist die zu erreichende Endstellung schließlich erreicht, wie sie in Figur 8d gezeigt ist, liegen wieder alle Schaufeln 4 am Schaufelrad 1 bzw. am Außenring 3 des Schaufelrads 1 an. Anschließend wird bei dem Weiterdrehen des Außenrings 3 eine erneute Verriegelung zwischen Stellring 5 und Außenring 3 bewirkt, indem der Sperrriegel 35 durch seine Vorspannung in die andere Vertiefung 52 gedrückt wird, so dass der in die zweite Vertiefung 52 gedrückte Sperrriegel 35 den Stellring 5 kraft- und formschlüssig durch die Kombination aus Sperrriegel 35 und Vertiefung 52 an Ort und Stelle hält und den Stellring 5 mit dem Außenring 3 verbindet. Nach dem Ende des Schwenkvorgangs können alle Schaufeln 4 in ihren neuen Endstellungen durch die bereits beschriebene Hemmung wieder fixiert werden. Anschließend kann die Arretierung des Stellrings 5 wieder gelöst werden, und die Arbeitsroutine in entgegengesetzter Richtung wird fortgesetzt.

Vorhergehend wurde eine bevorzugte Ausführungsform der vorliegenden Erfindung beschrieben, wobei aber die vorliegende Erfindung nicht auf die zuvor beschriebene bevorzugte Ausführungsform beschränkt ist. Diverse Modifikationen in der Ausgestaltung können vorgenommen werden, ohne von der Erfindung abzuweichen, wie sie im Umfang der nachfolgenden Ansprüche vorgegeben ist.

## Patentansprüche

1. Schaufelrad (1), insbesondere zum kontinuierlichen Abbau von Material einer Schüttguthalde, mit
einem feststehenden Innenring (2),
einem relativ zu dem Innenring (2) drehbaren Außenring (3), und
mindestens einer Schaufel (4), die mit dem Außenring (3) über eine feste Schwenkachse (44) schwenkbar verbunden ist,
**dadurch gekennzeichnet, dass**
das Schaufelrad (1) ferner mindestens einen Stellring (5) aufweist, welcher mit dem Außenring (3) durch eine Verriegelung trennbar in Verbindung steht, wobei
jede Schaufel (4) einen Führungsbolzen (46) und der Stellring (5) ein Langloch (511) für jede Schaufel (4) oder jede Schaufel ein Langloch und der Stellring einen Führungsbolzen für jede Schaufel aufweist, wobei der Führungsbolzen (46) in dem Langloch (511) geführt ist,
der Stellring (5) in einem mit dem Außenring (3) verriegelten Zustand jede Schaufel (4) in einer an dem Außenring (3) anliegenden ersten Endstellung (4A) oder einer der ersten Endstellung (4A) gegenüberliegenden, an dem Außenring (3) anliegenden zweiten Endstellung (4B) hält, und
in einem von dem Außenring (3) entriegelten Zustand des Stellrings (5) eine Drehung des Außenrings (3) relativ zu dem Stellring (5) eine durch den Führungsbolzen (46) in dem Langloch (511) geführte Schwenkbewegung jeder Schaufel (4) um die Schwenkachse (44) in eine der beide Endstellungen (4A, 4B) ermöglicht.

2. Schaufelrad (1) nach Anspruch 1, wobei die Verriegelung der trennbaren Verbindung zwischen Stellring (5) und Außenring (3) durch eine formschlüssige und/oder eine kraftschlüssige Verbindung erfolgt, vorzugsweise wobei die Verriegelung der trennbaren Verbindung zwischen Stellring (5) und Außenring (3) durch eine Kombination aus einem vorgespannten Sperrriegel (35), vorzugsweise durch eine Druckfeder (36) vorgespannt, und mindestens einer in dem Stellring (5) entsprechend dazu vorgesehenen Vertiefung (52) umgesetzt ist, wobei weiter vorzugsweise zwei Vertiefungen (52) in dem Stellring (5) vorgesehen sind, die jeweils einer der beiden Schaufelendstellungen (4A, 4B) entsprechen.

3. Schaufelrad (1) nach Anspruch 2, wobei an einer Vielzahl von Schaufeln (1) des Schaufelrads (1), vorzugsweise an jeder Schaufel (1), ein vorgespannter Sperrriegel (35) und zwei Vertiefungen (52) in dem Stellring (5) vorgesehen sind, die jeweils einer der beiden Schaufelendstellungen entsprechen.

4. Schaufelrad (1) nach einem der vorangehenden Ansprüche, wobei der Stellring (5) in dem von dem Außenring (3) entriegelten Zustand durch eine Arretiereinrichtung (6) arretiert ist, vorzugsweise wobei die Arretiereinrichtung (6) den Stellring (5) gegen ein durch eine Drehbewegung des Außenrings (3) ausgelöstes Mitdrehen des Stellrings (5) sichert.

5. Schaufelrad (1) nach Anspruch 4, wobei die Arretiereinrichtung (6) einen Sperrbolzen (61) aufweist, der mit dem feststehenden Innenring (2) in Verbindung steht, und wobei der Sperrbolzen (61) eingerichtet ist, um mit einem an dem Stellring (5) vorgesehenen Anschlag (54) in Anlage zu gehen, vorzugsweise wobei ferner ein Stellantrieb, insbesondere mit einem Hydraulikzylinder, vorgesehen ist, der mit dem Sperrbolzen (61) in Wirkverbindung steht, um den Sperrbolzen (61) zu dem Anschlag (54) hin und von diesem weg zu bewegen.

6. Schaufelrad (1) nach Anspruch 4 oder 5, wobei eine Bewegung des Außenrings (3) gegenüber dem arretierten Stellring (5) ein Lösen der Verriegelung der trennbaren Verbindung zwischen Stellring (5) und Außenring (3) bewirkt.

7. Schaufelrad (1) nach einem der Ansprüche 4 bis 6, wobei das Schaufelrad (1) ferner mindestens eine Überwachungseinheit aufweist, welche eine Position des Außenrings (3) zum Stellring (5) erfasst, auf dessen Erfassungsergebnis beruhend die Arretierung des Stellrings (5) bewirkt und/oder gelöst werden kann, vorzugsweise wobei die Überwachungseinheit einen Näherungssensor und/oder einen Inkrementalgeber eines Antriebs des Schaufelrads (1) umfasst.

8. Schaufelrad (1) nach einem der vorangehenden Ansprüche, wobei
der Stellring (5) an einem Umfang des Außenrings (3) angeordnet ist;
das Langloch (511) außerhalb des Umfangs des Außenrings (3) angeordnet ist;
eine Verlagerungseinrichtung (7) zwischen Stellring (5) und Außenring (3) vorgesehen ist, vorzugsweise in Form von sequentiell angeordneten Gleitblechen (7) oder einem durchgehenden Gleitring; und/oder
eine Führung der wechselweisen Schwenkbewegung einer jeden Schaufel (4) um deren Schwenkachse (44) durch eine Bewegung deren Führungsbolzen (46) in dem entsprechenden Langloch (511) sichergestellt ist.

9. Schaufelrad (1) nach einem der vorangehenden Ansprüche, wobei die Schwenkachse (44) einer jeden Schaufel (4) ausgehend von einer Rotationsachse (11) des Schaufelrads (1) nach außen gehend weiter von der Rotationsachse (11) des Schaufelrads (1) entfernt angeordnet ist als der Führungsbolzen (46) und das Langloch (511), und/oder wobei der Führungsbolzen (46) ein austauschbarer Führungsbolzen (46) ist.

10. Schaufelrad (1) nach einem der vorangehenden Ansprüche, wobei ein Innendurchmesser des Langlochs (511) größer als ein Außendurchmesser des Führungsbolzens (46) ist, vorzugsweise wobei der Innendurchmesser des Langlochs (511) 1 mm bis 5 mm größer als der Außendurchmesser des Führungsbolzens (46) ist.

11. Schaufelrad (1) nach einem der vorangehenden Ansprüche, wobei jede Schaufel (4) mindestens einen Führungsarm (43) aufweist, der durch den Führungsbolzen (46) mit dem Stellring (5) verbunden ist und der eine Schwenkbewegung einer jeden Schaufel (4) um deren Schwenkachse (44) durch eine Bewegung des Führungsbolzens (46) in dem entsprechenden Langloch (511) führt.

12. Schaufelrad (1) nach einem der vorangehenden Ansprüche, wobei jede Schaufel (4) zumindest aus einem Schaufelboden (41) und zwei Seitenteilen (42) besteht, welche an entgegengesetzten Seiten des Schaufelbodens (41) angeordnet sind, wobei jedes Schaufelseitenteil (42) mit dem Außenring (3) über die Schwenkachse (44) verbunden ist und einen Führungsbolzen (46) an einem entsprechenden Führungsarm (43) aufweist, der in einem entsprechenden Langloch (511) in dem Stellring (5) angeordnet und dadurch mit dem Stellring (5) verbunden ist.

13. Schaufelrad (1) nach einem der vorangehenden Ansprüche, wobei das Schaufelrad (1) eine Vielzahl von Schaufeln (4) aufweist und jede Schaufel (4) der Vielzahl von Schaufeln (4) wechselweise in der ersten und der zweiten Endstellung (4A, 4B) fixiert werden kann, wobei vorzugsweise eine synchrone Schwenkbewegung der Vielzahl von Schaufeln (4) umgesetzt wird.

14. Brückenschaufelradgerät, insbesondere zur Rückladung von Material einer Schüttguthalde, mit
einer an einer Brücke montierten Laufkatze (10), welche entlang der Brücke beweglich ist,
einem Schaufelrad (1) nach einem der vorangehenden Ansprüche, wobei der Außenring (3) des Schaufelrads (1) um den mit der Laufkatze (10) fest verbundenen Innenring (2) rotieren kann, und
einer Gurtfördereinrichtung, welche das von dem Schaufelrad (1) abgebaute Material auf einem Fördergurt aufnimmt und relativ zu der Laufkatze (10) fördert,
wobei das Brückenschaufelgerät vorzugsweise ferner einen an der Laufkatze (10) montierten aktiven oder passiven Rechen, insbesondere eine Egge, aufweist, welche das Material vor Abbau durch das Schaufelrad (1) an den Abbauort, insbesondere an den Fuß der Schüttguthalde befördert, und/oder
wobei das Schaufelrad (1) vorzugsweise um den Fördergurt herum rotiert.

15. Verfahren zum Schwenken mindestens einer Schaufel (4) eines Schaufelrads (1) nach einem der Ansprüche 1 bis 13, mit den folgenden Schritten:
Arretieren des Stellrings (5);
Lösen der Verriegelung zwischen Stellring (5) und Außenring (3) durch Drehen des Außenrings (3) gegenüber dem feststehenden Innenring (2) und bei arretiertem Stellring (5) in einer ersten Drehrichtung, wobei der Außenring (3) gegenüber dem arretierten Stellring (5) in der ersten Drehrichtung gedreht wird,
Weiterdrehen des Außenrings (3) gegenüber dem feststehenden Innenring (2) und bei arretiertem Stellring (5) in der ersten Drehrichtung, bis die mindestens eine Schaufel (4), vorzugsweise eine Vielzahl von Schaufeln (4), von der an dem Außenring (3) anliegenden ersten Endstellung (4A) in die der ersten Endstellung (4A) gegenüberliegenden, an dem Außenring (3) anliegenden zweiten Endstellung (4B) geschwenkt ist, und Bewirken der Verriegelung zwischen Stellring (5) und Außenring (3); und
Lösen der Arretierung des Stellrings (5).

## Claims

1. A bucket wheel (1), in particular for continuous mining of material of a bulk material pile, with
a fixed inner ring (2),
an outer ring (3) rotatable relative to the inner ring (2), and
at least one bucket (4), which is pivotably connected to the outer ring (3) via a fixed pivot axis (44),
**characterized in that**
the bucket wheel (1) further comprises at least one adjusting ring (5) which is separably connected to the outer ring (3) by an interlock, wherein
each bucket (4) has a guide pin (46) and the adjusting ring (5) has an elongated hole (511) for each bucket (4), or each bucket has an elongated hole and the adjusting ring has a guide pin for each bucket, the guide pin (46) being guided in the elongated hole (511),
in a state locked to the outer ring (3), the adjusting ring (5) holds each bucket (4) in a first end position (4A) abutting against the outer ring (3) or in a second end position (4B) abutting against the outer ring (3) and opposite to the first end position (4A), and
in a state of the adjusting ring (5) being unlocked from the outer ring (3), a rotation of the outer ring (3) relative to the adjusting ring (5) allows a pivoting movement of each bucket (4) about the pivot axis (44) into one of the two end positions (4A, 4B) guided by the guide pin (46) in the elongated hole (511).

2. The bucket wheel (1) according to claim 1, wherein the interlock of the separable connection between adjusting ring (5) and outer ring (3) is effected by a positive and/or a non-positive connection, preferably wherein the interlock of the separable connection between adjusting ring (5) and outer ring (3) is implemented by a combination of a pretensioned locking latch (35) preferably preloaded by a compression spring (36), and at least one recess (52) provided in the adjusting ring (5) corresponding thereto, wherein further preferably two recesses (52) are provided in the adjusting ring (5), each corresponding to one of the two bucket end positions (4A, 4B).

3. The bucket wheel (1) according to claim 2, wherein on a plurality of buckets (1) of the bucket wheel (1), preferably on each bucket (1), a biased locking latch (35) and two recesses (52) are provided in the adjusting ring (5), each corresponding to one of the two bucket end positions.

4. The bucket wheel (1) according to one of the preceding claims, wherein the adjusting ring (5) is locked in the state unlocked from the outer ring (3) by a locking device (6), preferably wherein the locking device (6) secures the adjusting ring (5) against co-rotation of the adjusting ring (5) triggered by a rotary movement of the outer ring (3).

5. The bucket wheel (1) according to claim 4, wherein the locking device (6) comprises a locking pin (61) which is connected to the fixed inner ring (2), and wherein the locking pin (61) is arranged to come into contact with a stop (54) provided on the adjusting ring (5), preferably wherein furthermore an actuator, in particular with a hydraulic cylinder, is provided, which is in operative connection with the locking bolt (61) in order to move the locking bolt (61) towards and away from the stop (54).

6. The bucket wheel (1) according to claim 4 or 5, wherein a movement of the outer ring (3) relative to the locked adjusting ring (5) causes a release of the locking of the separable connection between adjusting ring (5) and outer ring (3).

7. The bucket wheel (1) according to any one of claims 4 to 6, wherein the bucket wheel (1) further comprises at least one monitoring unit which detects a position of the outer ring (3) relative to the adjusting ring (5), based on the detection result of which the locking of the adjusting ring (5) can be effected and/or released, preferably wherein the monitoring unit comprises a proximity sensor and/or an incremental encoder of a drive of the bucket wheel (1).

8. The bucket wheel (1) according to any one of the preceding claims, wherein
the adjusting ring (5) is arranged on a circumference of the outer ring (3);
the elongated hole (511) is arranged outside the circumference of the outer ring (3);
a displacement device (7) is provided between the adjusting ring (5) and the outer ring (3), preferably in the form of sequentially arranged sliding plates (7) or a continuous sliding ring; and/or
guidance of the alternating pivoting movement of each bucket (4) about its pivot axis (44) is ensured by a movement of its guide pin (46) in the corresponding elongated hole (511).

9. Bucket wheel (1) according to any one of the preceding claims, wherein the pivot axis (44) of each bucket (4), starting from an axis of rotation (11) of the bucket wheel (1) and extending outwardly, is arranged further away from the axis of rotation (11) of the bucket wheel (1) than the guide pin (46) and the elongated hole (511), and/or wherein the guide pin (46) is a replaceable guide pin (46).

10. The bucket wheel (1) according to any one of the preceding claims, wherein an inner diameter of the elongated hole (511) is larger than an outer diameter of the guide pin (46), preferably wherein the inner diameter of the elongated hole (511) is 1 mm to 5 mm larger than the outer diameter of the guide pin (46).

11. The bucket wheel (1) according to one of the preceding claims, wherein each bucket (4) comprises at least one guide arm (43) which is connected to the adjusting ring (5) by the guide pin (46) and which guides a pivoting movement of each bucket (4) about its pivot axis (44) by a movement of the guide pin (46) in the corresponding elongated hole (511).

12. The bucket wheel (1) according to one of the preceding claims, wherein each bucket (4) consists at least of a bucket bottom (41) and two side parts (42) arranged on opposite sides of the bucket bottom (41), wherein each bucket side part (42) is connected to the outer ring (3) via the pivot axis (44) and has a guide pin (46) on a corresponding guide arm (43) arranged in a corresponding elongated hole (511) in the adjusting ring (5) and thereby connected to the adjusting ring (5).

13. The bucket wheel (1) according to any one of the preceding claims, wherein the bucket wheel (1) comprises a plurality of buckets (4) and each bucket (4) of the plurality of buckets (4) can be alternately fixed in the first and second end positions (4A, 4B), preferably implementing a synchronous pivoting movement of the plurality of buckets (4).

14. A bridge bucket wheel device, in particular for reloading material from a bulk material pile, with
a trolley (10) mounted on a bridge and movable along the bridge,
a bucket wheel (1) according to any one of the preceding claims, wherein the outer ring (3) of the bucket wheel (1) can rotate about the inner ring (2) which is fixedly connected to the trolley (10), and
a belt conveyor device which receives the material removed by the bucket wheel (1) on a conveyor belt and conveys it relative to the trolley (10),
wherein the bridge bucket device preferably further comprises an active or passive rake, in particular a harrow, mounted on the trolley (10), which rake conveys the material to the extraction site, in particular to the foot of the bulk material pile, prior to extraction by the bucket wheel (1), and/or
wherein the bucket wheel (1) preferably rotates around the conveyor belt.

15. A method for pivoting at least one bucket (4) of a bucket wheel (1) according to any one of claims 1 to 13, comprising the following steps:
Locking the adjusting ring (5);
Releasing the interlock between the adjusting ring (5) and the outer ring (3) by rotating the outer ring (3) relative to the stationary inner ring (2) and with the adjusting ring (5) locked in a first direction of rotation, the outer ring (3) being rotated relative to the locked adjusting ring (5) in the first direction of rotation,
further rotating the outer ring (3) relative to the stationary inner ring (2) and with the adjusting ring (5) locked in the first direction of rotation until the at least one bucket (4), preferably a plurality of buckets (4), is pivoted from the first end position (4A) bearing against the outer ring (3) into the second end position (4B) opposite the first end position (4A) and bearing against the outer ring (3), and effecting the locking between the adjusting ring (5) and the outer ring (3); and
Loosen the locking of the adjusting ring (5).

## Revendications

1. Roue à aubes (1), plus particulièrement pour l'extraction en continu de matériau d'un produit en vrac d'un terril, avec
un anneau interne fixe (2),
un anneau externe (3) rotatif par rapport à l'anneau interne (2) et
au moins une aube (4), qui est reliée de manière pivotante avec l'anneau externe (3) par l'intermédiaire d'un axe de pivotement fixe (44),
**caractérisée en ce que**
la roue à aubes (1) comprend en outre au moins un anneau de réglage (5) qui est relié de manière amovible avec l'anneau externe (3) à l'aide d'un verrouillage, dans lequel
chaque aube (4) comprend une tige de guidage (46) et l'anneau de réglage (5) comprend un trou oblong (511) pour chaque aube (4) ou chaque aube comprend un trou oblong et l'anneau de réglage comprend une tige de guidage pour chaque aube, dans lequel la tige de guidage (46) est guidée dans le trou oblong (511),
l'anneau de réglage (5) maintient, dans un état verrouillé avec l'anneau externe (3), chaque aube (4) dans une position finale (4A) appuyée contre l'anneau externe (3) ou une deuxième position finale (4B), opposée à la première position finale (4A), appuyée contre l'anneau externe (3) et
dans un état de l'anneau de réglage (5) déverrouillé de l'anneau externe (3), une rotation de l'anneau externe (3) par rapport à l'anneau de réglage (5) permet un mouvement de pivotement, guidé par la tige de guidage (46) dans le trou oblong (511), de chaque aube (4) autour de l'axe de pivotement (44) vers une des deux positions finales (4A, 4B).

2. Roue à aubes (1) selon la revendication 1, dans laquelle le verrouillage de la liaison amovible entre l'anneau de réglage (5) et l'anneau externe (3) a lieu à l'aide d'une liaison par complémentarité de forme et/ou par force, de préférence dans laquelle le verrouillage de la liaison amovible entre l'anneau de réglage (5) et l'anneau externe (3) est précontrainte par une combinaison d'un verrou de blocage précontraint (35), de préférence un ressort de compression (36) et au moins un renfoncement (52) prévu à cet effet dans l'anneau de réglage (5) est réalisé, de préférence deux renfoncements (52) sont prévus dans l'anneau de réglage (5), qui correspondent chacun à une des deux positions finales des aubes (4A, 4B).

3. Roue à aubes (1) selon la revendication 2, dans laquelle, sur une pluralité d'aubes (1) de la roue à aubes (1), de préférence sur chaque aube (1), sont prévus un verrou de blocage (35) et deux renfoncements (52) dans l'anneau de réglage (5), qui correspondent chacun à une des deux positions finales des aubes.

4. Roue à aubes (1) selon l'une des revendications précédentes, dans laquelle, dans l'état déverrouillé de l'anneau externe (3), l'anneau de réglage (5) est arrêté par un dispositif d'arrêt (6), de préférence dans laquelle le dispositif d'arrêt (6) sécurise l'anneau de réglage (5) contre un entraînement de l'anneau de réglage (5) déclenché par un mouvement de rotation de l'anneau externe (3).

5. Roue à aubes (1) selon la revendication 4, dans laquelle le dispositif d'arrêt (6) comprend une tige de blocage (61) qui est reliée avec l'anneau interne fixe (2) et dans laquelle la tige de blocage (61) est conçue pour s'appuyer contre une butée (54) prévue sur l'anneau de réglage (5), de préférence dans laquelle un entraînement de réglage, plus particulièrement avec un vérin hydraulique, est prévu, qui est en liaison fonctionnelle avec la tige de blocage (61), afin d'éloigner et de rapprocher la tige de blocage (61) de la butée (54).

6. Roue à aubes (1) selon la revendication 4 ou 5, dans laquelle un mouvement de l'anneau externe (3) par rapport à l'anneau de réglage (5) arrêté provoque un détachement du verrouillage de la liaison amovible entre l'anneau de réglage (5) et l'anneau externe (3).

7. Roue à aubes (1) selon l'une des revendications 4 à 6, dans laquelle la roue à aubes (1) comprend en outre au moins une unité de surveillance, qui détecte une position de l'anneau externe (3) par rapport à l'anneau de réglage (5), provoque, sur la base de ce résultat de détection, l'arrêt de l'anneau de réglage (5) et/ou peut être détachée, de préférence dans laquelle l'unité de surveillance comprend un capteur de proximité et/ou un générateur incrémental d'un entraînement de la roue à aubes (1).

8. Roue à aubes (1) selon l'une des revendications précédentes, dans laquelle
l'anneau de réglage (5) est disposé sur une circonférence de l'anneau externe (3) ;
le trou oblong (511) est disposé hors de la circonférence de l'anneau externe (3) ;
un dispositif de déplacement (7) est prévu entre l'anneau de réglage (5) et l'anneau externe (3), de préférence sous la forme de tôle de glissement (7) disposées de manière séquentielle ou d'une bague de glissement continue ; et/ou
un guidage du mouvement de pivotement alternatif de chaque aube (4) autour de son axe de pivotement (44) est assuré par un mouvement de leur tige de guidage (46) dans le trou oblong (511) correspondant.

9. Roue à aubes (1) selon l'une des revendications précédentes, dans laquelle l'axe de pivotement (44) de chaque aube (4) est disposé, à partir d'un axe de rotation (11) de la roue à aubes (1) vers l'extérieur, plus loin de l'axe de rotation (11) de la roue à aubes (1) que la tige de guidage (46) et le trou oblong (511), et/ou dans laquelle la tige de guidage (46) est une tige de guidage (46) interchangeable.

10. Roue à aubes (1) selon l'une des revendications précédentes, dans laquelle un diamètre intérieur du trou oblong (511) est supérieur à un diamètre extérieur de la tige de guidage (46), de préférence dans laquelle le diamètre intérieur du trou oblong (511) est de 1 mm à 5 mm plus grand que le diamètre extérieur de la tige de guidage (46).

11. Roue à aubes (1) selon l'une des revendications précédentes, dans laquelle chaque aube (4) comprend au moins un bras de guidage (43), qui est relié par la tige de guidage (46) avec l'anneau de réglage (5) et qui guide un mouvement de pivotement de chaque aube (4) autour de son axe de pivotement (44) grâce à un mouvement de la tige de guidage (46) dans le trou oblong (511) correspondant.

12. Roue à aubes (1) selon l'une des revendications précédentes, dans laquelle chaque aube (4) est constituée d'au moins un fond d'aube (41) et de deux parties latérales (42), qui sont disposées sur deux côtés opposés du fond d'aube (41), dans laquelle chaque partie latérale d'aube (42) est reliée avec l'anneau externe (3) par l'intermédiaire de l'axe de pivotement (44) et comprend une tige de guidage (46) sur un bras de guidage (43) correspondant, qui est disposé dans un trou oblong (511) correspondant dans l'anneau de réglage (5) et qui est relié grâce à lui avec l'anneau de réglage (5).

13. Roue à aubes (1) selon l'une des revendications précédentes, dans laquelle la roue à aubes (1) comprend une pluralité d'aubes (4) et chaque aube (4) de la pluralité d'aubes (4) peut être fixée alternativement dans la première et la deuxième position finale (4A, 4B), dans laquelle, de préférence, un mouvement de pivotement synchrone de la pluralité d'aubes (4) est converti.

14. Appareil à roue à aubes à pont, plus particulièrement pour le rechargement de matériau d'un terril de produit en vrac, avec
un chariot roulant (10) monté sur un pont, qui est mobile le long du pont,
une roue à aubes (1) selon l'une des revendications précédentes, dans laquelle l'anneau externe (3) de la roue à aubes (1) peut tourner autour de l'anneau interne (2) relié de manière fixe avec le chariot roulant (10) et
un dispositif de convoyage à courroie qui reçoit le matériau extrait par la roue à aubes (1) sur une courroie de convoyage et le transporte par rapport au chariot roulant (10),
dans lequel l'appareil à roue à aubes à pont comprend de préférence en outre un râteau actif ou passif monté sur le chariot roulant (10), plus particulièrement une herse, qui transporte le matériau avant l'extraction par la roue à aubes (1) à lendroit de l'extraction, plus particulièrement au pied du terril de produit en vrac et/ou
dans lequel la roue à aubes (1) tourne de préférence autour de la courroie de convoyage.

15. Procédé de pivotement d'au moins une aube (4) d'une roue à aubes (1) selon l'une des revendications 1 à 13, avec les étapes suivantes :
arrêt de l'anneau de réglage (5) ;
détachement du verrouillage entre l'anneau de réglage (5) et l'anneau externe (3) par la rotation de l'anneau externe (3) par rapport à l'anneau interne fixe (3) et, lorsque l'anneau de réglage (5) est arrêté, dans un premier sens de rotation, dans lequel l'anneau externe (3) est tourné par rapport à l'anneau de réglage (5) dans le premier sens de rotation,
continuation de la rotation de l'anneau externe (3) par rapport à l'anneau interne fixe (2) et, lorsque l'anneau de réglage (5) est arrêté, dans le premier sens de rotation jusqu'à ce que l'au moins une aube (4), de préférence une pluralité d'aubes (4), soit pivotée de la première position finale (4A) appuyée contre l'anneau externe (3) vers la deuxième position finale (4B) appuyée contre l'anneau externe (3), opposée à la première position finale (4A) appuyée contre l'anneau externe (3) et actionnement du verrouillage entre l'anneau de réglage (5) et l'anneau externe (3) ; et
détachement de l'arrêt de l'anneau de réglage (5).
